# EUROPEAN PATENT SPECIFICATION

(11) **EP 4 576 490 B1**
(45) Date of publication and mention of the grant of the patent: **30.09.2026**
(21) Application number: 23863352.3
(22) Date of filing: 02.08.2023
(51) Int. Cl.: H02J 7/00, B60L 58/22, G01R 31/392, G01R 31/382, H01M 10/42, B60L 3/00, H01M 10/48, B60L 3/04, H01M 10/44, B60L 3/12, B60L 58/13, B60L 58/16, B60L 58/20, G01R 31/396

(54) **BATTERY MANAGEMENT APPARATUS, BATTERY PACK, ELECTRIC VEHICLE AND BATTERY MANAGEMENT METHOD**
BATTERIEVERWALTUNGSVORRICHTUNG, BATTERIEPACK, ELEKTROFAHRZEUG UND BATTERIEVERWALTUNGSVERFAHREN
APPAREIL DE GESTION DE BATTERIE, BLOC-BATTERIE, VÉHICULE ÉLECTRIQUE ET PROCÉDÉ DE GESTION DE BATTERIE

(30) Priority: 07.09.2022 KR 20220113716; 27.07.2023 KR 20230098407
(43) Date of publication of application: 25.06.2025
(73) Proprietor: LG Energy Solution, Ltd., Seoul 07335 (KR)
(72) Inventor: LEE, Bum-Hee, Daejeon 34122 (KR); NOH, Tae-Heon, Daejeon 34122 (KR); JO, Joon-Won, Daejeon 34122 (KR)
(74) Representative: Plasseraud IP
(86) International application number: PCT/KR2023/011365
(87) International publication number: WO 2024/053871

(56) References cited:
- EP-A1- 4 235 198
- WO-A1-2022/097931
- JP-B2- 7 087 923
- KR-A- 20220 100 470
- KR-A- 20220 100 470
- KR-B1- 101 642 329
- KR-B1- 102 201 988
- US-A1- 2013 207 616
- US-A1- 2020 233 037
- US-A1- 2023 148 088
- US-B2- 11 300 625

## Description

### TECHNICAL FIELD

The present disclosure relates to a battery management apparatus that differentially applies a balancing process to each of a plurality of battery cells according to an electric state of each of the plurality of battery cells.

The present application claims priority to Korean Patent Application No. 10-2022-0113716 filed on September 7, 2022 in the Republic of Korea and Korean Patent Application No. 10-2023-0098407 filed on July 27, 2023 in the Republic of Korea.

### BACKGROUND ART

As the demand for portable electronic products such as laptops, video cameras, and mobile phones that use electricity as a driving source is rapidly increasing, and mobile robots, electric bicycles, electric carts, and electric vehicles are becoming widely commercialized, research on high-performance secondary batteries capable of repeated charging and discharging is actively underway.

Commercially available rechargeable secondary batteries (hereinafter referred to as 'battery cells' or 'cells') include nickel cadmium batteries, nickel hydrogen batteries, nickel zinc batteries, and lithium secondary batteries. Among these, compared to other types of secondary batteries, lithium secondary batteries have the advantage of being free to charge and discharge as the memory effect rarely occurs and have a very low self-discharge rate. In addition, they have high energy density and high operating voltage, so they have been studied more intensively than other types of secondary batteries and also applied more extensively to actual products.

Recently, battery cells have been widely used not only in small devices such as portable electronic devices, but also in medium-to-large devices such as electric vehicles and energy storage systems (ESSs).

In this case, a battery module in which a plurality of electrically connected battery cells are stored together inside the module case is mainly applied. Furthermore, when high power or large capacity is required, a battery pack in which a plurality of battery modules electrically connected in series and/or parallel are included may also be applied.

Since these battery module or battery packs (hereinafter collectively referred to as 'battery') are devices that provide power, energy efficiency is an important issue. Therefore, various efforts are being made to increase energy density, such as implementing an electrode assembly using a plurality of unit stacks, improving the physical properties of battery cells, and increasing electrochemical efficiency.

In this regard, a balancing process that controls a plurality of battery cells included in the battery to have uniform (including an appropriate error range) electrical characteristics (voltage, SOC, etc.) by appropriately using charging or discharging circuits to optimize battery performance is being applied.

The plurality of battery cells may have uneven electrical characteristics (e.g. voltage or SOC, etc.) due to differences in individual dynamic states resulting from material characteristics of internal resistors or the like, artificial deviations due to the usage environment, cooling efficiency and capacity, etc.

When such a deviation in electrical characteristics occurs, the actually available resources are not used in an optimized manner, which causes the problem that the performance of the battery module is lowered compared to the actual available capacity or available output. Additionally, if at least one battery cell reaches the highest electrical characteristics ahead of other battery cells, the charging process ends without completing the charging of other battery cells with sufficient internal capacity, so the amount of charge in the entire battery module is greatly limited.

Although this is an extreme example, if one battery cell has the lowest voltage (charging voltage) and another battery cell has the highest voltage, the battery cannot be charged (energy storage) and also cannot be discharged (power supply) even if the other battery cells have the appropriate voltage.

In addition, if battery use continues without the voltage deviation being properly resolved, the voltage deviation becomes more severe, which not only worsens the deterioration in battery performance, but also may lead to safety problems such as ignition due to overcharging.

The balancing process is a method to solve this problem. By continuously controlling the plurality of battery cells to maintain a uniform electric state, it is possible to provide effects such as maintaining stable performance of the battery, increasing service life, and increasing output efficiency.

The balancing process is applied by charging battery cells with relatively low electrical characteristics through a separate power source, transferring energy from battery cells with relatively high electrical characteristics to battery cells with relatively low electrical characteristics, or the like, and for ease of circuit configuration, stability, prevention of malfunction, clarity of operation, etc., a method of discharging battery cells with relatively high electrical characteristics through a resistance circuit (load circuit), etc. is mainly applied.

However, this balancing is done based only on formal values measured or calculated externally, such as the voltage of the battery cell, without considering the actual characteristics of the battery cell.

For example, in the case of a battery cell with a high degree of degradation due to an increase in internal resistance, the electrical characteristics become relatively lower than that of other battery cells during discharge. Even in this case, the conventional balancing process is carried out to discharge a normal battery cell with high electrical characteristics, which may cause problems such as unnecessary consumption of available resources.

As seen earlier, balancing is continuously performed depending on the battery state of the current point, so this problem occurs repeatedly as battery use continues. Also, the degree of degradation has the behavior characteristic of accelerating over time, so the cycle in which the balancing process is carried out becomes shorter, further aggravating unnecessary energy waste and driving performance degradation, and also applying a serious negative impact on the battery life itself.

Document WO 2022/097931 A1 (English equivalent US 2023/148088 A1) relates to a battery management apparatus and method in which whether to perform balancing for a battery cell may be determined based on an aging degree of the battery cell. Document US 2013/207616 A1 relates to a battery system capable of efficiently performing cell balancing, a method of controlling the battery system, and an energy storage system including the battery system. Document US 2020/233037 A1 relates to a rechargeable battery evaluation device, a rechargeable battery evaluation method, and a rechargeable battery evaluation system. Document KR 2022 0100470 A (English equivalent EP 4 235 198 A1) relate to a battery management apparatus and method.

### DISCLOSURE

### Technical Problem

The present disclosure is designed to solve the problems of the related art, and therefore the present disclosure is directed to providing a battery management apparatus and method that can further optimize the driving performance of a battery module by selectively or differentially performing a balancing process for at least one battery cell among a plurality of battery cells, by additionally considers not only the electric state of each of the plurality of battery cells included in the battery module, but also the behavior characteristics of each of the plurality of battery cells.

The technical problems that the present disclosure seeks to solve are not limited to the above-mentioned problems, and other problems not mentioned will be clearly understood by those skilled in the art from the description below.

### Technical Solution

The invention is defined in the appended claims.

A battery management apparatus according to one aspect of the present disclosure is provided for a battery module including a plurality of battery cells. The battery management apparatus comprises a state detection unit configured to obtain a plurality of cell state parameters indicating an electric state of each of the plurality of battery cells; a balancing processing unit configured to perform a balancing process, which is a procedure of selectively discharging or charging each of the plurality of battery cells, to suppress deviation in the electric state between the plurality of battery cells; and a control unit configured to control the balancing processing unit to perform a balancing process for at least one battery cell among the plurality of battery cells, based on the plurality of cell state parameters.

The battery management apparatus further comprises a cell classifying unit configured to classify each of the plurality of battery cells as a degraded cell or a normal cell, based on the plurality of cell state parameters. The control unit is configured to control the balancing processing unit so that the balancing process is differentially performed based on the cell state parameter of the degraded cell and the cell state parameter of the normal cell.

The control unit may be configured to control the balancing processing unit so that the balancing process for the degraded cell is performed when the cell state parameter of the degraded cell is greater than the cell state parameter of the normal cell. The cell state parameter may represent at least one of voltage and SOC (State Of Charge).

The cell classifying unit may include an input unit configured to obtain the plurality of cell state parameters from the state detection unit; a calculation processing unit configured to calculate a plurality of cell behavior parameters representing the behavior characteristics of the electric state of each of the plurality of battery cells, based on the plurality of cell state parameters; and a selection unit configured to classify each of the plurality of battery cells as the degraded cell or the normal cell, based on the relative difference between the plurality of cell behavior parameters.

The cell behavior parameter may include a change rate of the cell state parameter. The cell classifying unit may be configured to classify each battery cell mapped to n (n is a natural number of 1 or more) cell behavior parameters that correspond to high ranks in size among the plurality of cell behavior parameters as the degraded cell.

The cell behavior parameter may include a change rate of the cell state parameter. The cell classifying unit may be configured to select each battery cell, which satisfies both that the cell behavior parameter in a charging process of the battery module is greater than or equal to a first reference value and that the cell behavior parameter in a discharging process of the battery module is greater than or equal to a second reference value, as the degraded cell.

The state detection unit may be configured to obtain the SOC of the battery module as a module state parameter representing the electric state of the battery module.

The control unit may be configured to control the balancing processing unit so that the balancing process for the degraded cell is performed under the condition that the module state parameter is greater than or equal to a reference SOC during charging of the battery module.

The battery management apparatus may further comprise a SOC information storage unit configured to store first SOC time-series data and second SOC time-series data; a statistical processing unit configured to calculate a SOC statistic value based on the first SOC time-series data and the second SOC time-series data; and a reference setting unit configured to set the reference SOC to be equal to the SOC statistic value.

The first SOC time-series data may include first to (k-1)th start SOCs, which represent the SOC of the battery module at a start point of each of first to (k-1)th charging processes conducted in the past for the battery module. The second SOC time-series data may include first to (k-1)th end SOCs, which represent the SOC of the battery module at an end point of each of the first to (k-1)th charging processes. k is a natural number of 2 or more.

The statistical processing unit may be configured to calculate the SOC statistical value further based on SOH of the battery module.

The statistical processing unit may be configured to determine a reference number based on the SOH of the battery module. The statistical processing unit may be configured to extract (k-j)th to (k-1)th start SOCs from the first SOC time-series data. The statistical processing unit may be configured to extract (k-j)th to (k-1)th end SOCs from the second SOC time-series data. The statistical processing unit may be configured to calculate the SOC statistic value to be identical to an average value of the (k-j)th to (k-1)th start SOCs and the (k-j)th to (k-1)th end SOCs. j is the reference number.

A battery pack according to another aspect of the present disclosure comprises the battery management apparatus.

An electric vehicle according to still another aspect of the present disclosure comprises the battery pack.

A battery management method according to still another aspect of the present disclosure may be executable by the battery management apparatus. The battery management method comprises: by the state detection unit, obtaining the plurality of cell state parameters indicating an electric state of each of the plurality of battery cells; by the control unit, controlling the balancing processing unit to perform the balancing process for at least one battery cell among the plurality of battery cells, based on the plurality of cell state parameters, to suppress deviation in the electric state between the plurality of battery cells.

The step of controlling the balancing processing unit may include: classifying each of the plurality of battery cells as a degraded cell or a normal cell, based on the plurality of cell state parameters; and controlling the balancing processing unit so that the balancing process is differentially performed based on the cell state parameter of the degraded cell and the cell state parameter of the normal cell.

The step of controlling the balancing processing unit may include: obtaining SOC of the battery module as a module state parameter representing the electric state of the battery module; and controlling the balancing processing unit so that the balancing process for the degraded cell is performed under the condition that the module state parameter is greater than or equal to a reference SOC during charging of the battery module.

### Advantageous Effects

According to at least one of the embodiments of the present disclosure, operating conditions that do not cause weakening of the driving performance of the battery module can be identified using time-series changes in the electric state and/or behavior characteristics of each of the plurality of battery cells, and the balancing process for at least one of the plurality of battery cells can be selectively performed while the identified operating conditions are satisfied.

In addition, according to at least one of the embodiments of the present disclosure, each of the plurality of battery cells in the battery module can be precisely classified as a normal cell or degraded cell, and the classification result can be organically incorporated to the control operation for the balancing process, improving the performance of the battery module.

In addition, according to at least one of the embodiments of the present disclosure, considering the difference in behavior characteristics between a normal cell and a degraded cell, it is allowed to selectively implement a balancing process for at least one battery cell, so it is possible to effectively resolve the problems that the available capacity or output of a normal cell is unnecessarily limited, as well as that performance degradation becomes permanent or lifespan is shortened.

In addition, according to at least one of the embodiments of the present disclosure, the efficiency of the balancing process can be improved by calculating the statistic value of the swing range of SOC (State of Charge), which is the main use range of the battery module, based on the charging history and/or discharging history that the battery module has undergone, and using this statistic value as a kind of criterion for differential implementing the balancing process.

In addition, according to at least one of the embodiments of the present disclosure, the balancing process can be performed only on battery cells classified as any one type of a degraded cell or a normal cell. If the balancing process is performed only on degraded cells instead of normal cells, there is an advantage that the state deviation between normal cells and degraded cells is quickly resolved. When the balancing process is performed only on normal cells instead of degraded cells, the charging and discharging of degraded cells by the balancing process is reduced to that extent, which helps equalize the lifespan deviation between normal cells and degraded cells.

In addition, the present disclosure may have various other effects, and these will be explained in each embodiment, or the explanation will be omitted for effects that can be easily inferred by a person skilled in the art.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a block diagram schematically showing the configuration of a battery pack according to an embodiment of the present disclosure.
FIG. 2 is a diagram schematically showing the configuration of the cell classifying unit shown in FIG. 1.
FIG. 3 is a block diagram schematically showing the configuration of a battery pack according to another embodiment of the present disclosure.
FIG. 4 is a block diagram schematically showing the configuration of the reference processing unit shown in FIG. 3.
FIG. 5 is a flowchart explaining an example of a battery management method executable by the battery management apparatus shown in FIG. 1.
FIG. 6 is a flowchart explaining another example of a battery management method executable by the battery management apparatus shown in FIG. 1.
FIG. 7 is a flowchart explaining still another example of a battery management method executable by the battery management apparatus shown in FIG. 1.
FIG. 8 is a flowchart explaining the process of classifying each of a plurality of battery cells as a normal cell or a degraded cell.
FIG. 9 is a flowchart explaining a process executable by the battery management apparatus shown in FIG. 3.
FIG. 10 is a flowchart referenced to explain the process of determining a reference SOC.
FIG. 11 is a diagram referenced to illustratively explain changes in the SOC of a battery cell over time.
FIG. 12 is a diagram referenced to explain the behavior characteristics of normal cells and degraded cells, respectively.
FIG. 13 is an enlarged view of the dotted line area shown in FIG. 12.
FIG. 14 is a diagram referenced to explain the process of differentially performing the balancing process for degraded cells and normal cells according to the reference SOC.
FIG. 15 is a diagram referenced to explain the differential balancing process implemented when the reference SOC is 80%.
FIG. 16 is a diagram referenced to schematically explain an example of the balancing processing unit shown in FIGS. 1 and 3.
FIG. 17 is a diagram referenced to schematically explain another example of the balancing processing unit shown in FIGS. 1 and 3.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise. Additionally, terms such as "... unit" described in the specification refer to a unit that processes at least one function or operation, and may be implemented as hardware, software, or a combination of hardware and software.

In addition, throughout the specification, when a portion is referred to as being "connected" to another portion, it is not limited to the case that they are "directly connected", but it also includes the case where they are "indirectly connected" with another element being interposed between them.

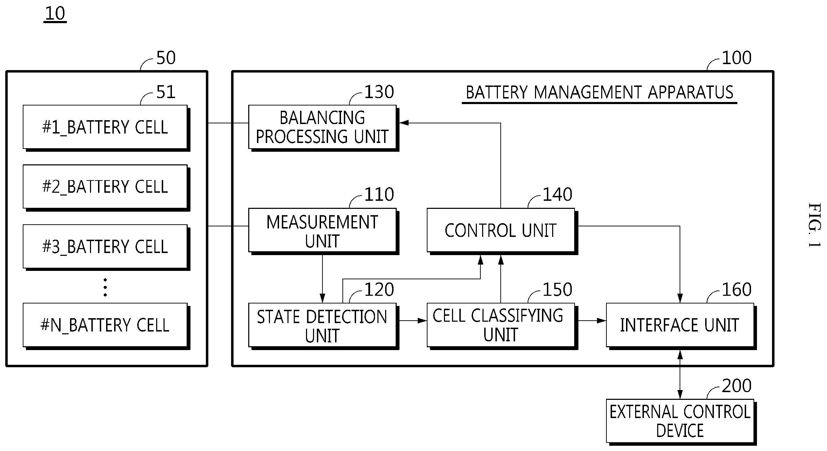

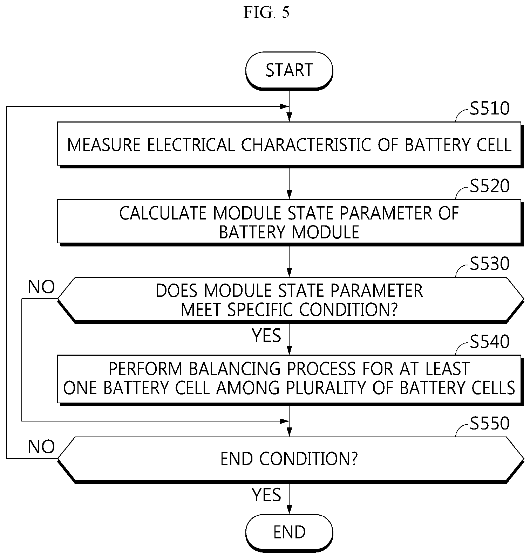

FIG. 1 is a block diagram schematically showing the configuration of a battery pack according to an embodiment of the present disclosure, and FIG. 5 is a flowchart explaining an example of a battery management method executable by the battery management apparatus shown in FIG. 1.

As shown in FIG. 1, the battery pack 10 includes a battery module 50 and a battery management apparatus 100.

The battery module 50 includes a plurality of battery cells #1 to #N. N is a natural number of 2 or more and may represent the total number of battery cells included in the battery module 50. The plurality of battery cells #1 to #N may be electrically connected to each other in series. In explanation common to the plurality of battery cells #1 to #N, symbol 51 may be used to refer to the battery cell. Although the battery cell 51 is shown as a single object in FIG. 1, this is only an example, and depending on the embodiment, the battery cell 51 may be a cell assembly in which a plurality of cell units connected in parallel are grouped.

The battery management apparatus 100 may monitor the electric state of each of the plurality of battery cells #1 to #N and the electric state of the battery module 50.

As will be described later, the battery management apparatus 100 performs and controls the balancing process of the plurality of battery cells #1 to #N.

In order to stably maintain and manage the charging and discharging efficiency as well as electrical characteristics, it may be desirable for the plurality of battery cells #1 to #N to be configured to have the same level of performance or specifications.

The battery management apparatus 100 may include a measurement unit 110, a state detection unit 120, a balancing processing unit 130, a control unit 140, a cell classifying unit 150, and an interface unit 160.

It is obvious that the battery management apparatus 100 can be implemented through various combinations of electronic devices and components such as storage means, operation processing means, and input/output means. It should be understood that each component of the battery management apparatus 100 shown in FIG. 1 may be physically separated, or alternatively, may be functionally or logically separated.

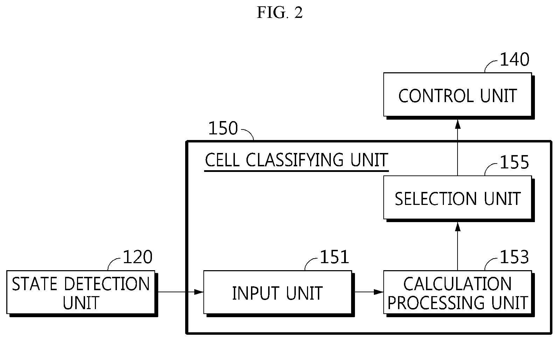

In other words, each component corresponds to a logical component for realizing the technical idea of the present disclosure, so even if each component is integrated or separated, if the function performed by the logical component of the present disclosure can be realized, it should be interpreted as being within the scope of the present disclosure, and if a component performs the same or similar function, it should be interpreted as being within the scope of the present disclosure, regardless of whether the name is consistent or whether the component is divided or integrated. The structure of the present disclosure shown in FIGS. 2 to 4 is also similar to this.

The state detection unit 120 calculates a plurality of cell state parameters representing the electric state of each of the plurality of battery cells #1 to #N and/or a module state parameter representing the electric state of the battery module 50 (S520, see FIG. 5). The module state parameter is an electrical characteristic based on the entire battery module 50 and may depend on the plurality of cell state parameters. The module state parameter may be a value representing the plurality of cell state parameters. For example, the SOC of the battery module 50 as a module state parameter may be determined to be identical to the average SOC of the plurality of battery cells #1 to #N according to the plurality of cell state parameters.

Depending on the embodiment, the state detection unit 120 may be linked with the measurement unit 110, which may be implemented with various voltage sensors, current sensors, temperature sensors, measuring devices, etc. known at the filing time. When the measurement unit 110 measures the electrical characteristics (voltage, current and/or temperature) of the plurality of battery cells #1 to #N or the battery module 50 (S510), the state detection unit 120 may collect (obtain) a fixed sampling rate or a variable sampling rate representing the measured value of the electrical characteristics of the battery cell 51. At this time, the measured value of the electrical characteristics of the battery cell 51 itself may be a cell state parameter. Alternatively, the state detection unit 120 may be configured to determine the cell state parameter of the battery cell 51 and the module state parameter (e.g., SOC, SOH, etc.) of the battery module 50 by applying a functional calculation process to the measured value of the electrical characteristics of the battery cell 51.

The cell state parameter represents the electric state of the battery cell 51 and may include at least one of voltage, current, temperature, SOC (State Of Charge), and SOH (State Of Health). Of course, the cell state parameter can be periodically generated per unit time, which can be variably set according to the design of hardware or software.

Depending on the embodiment, as the rate of discharging or charging increases, the period of obtaining the cell state parameter may be set shorter, and as the rate of discharging or charging decreases, the period of obtaining the cell state parameter may be set longer. The correspondence between the rate of discharge or charge and the period of obtaining the cell state parameter may be recorded in advance as a lookup table.

According to this embodiment, as power use occurs rapidly, more precise information can be interfaced to users, etc., and the efficiency of data processing can be increased by lowering the calculation processing speed and calculation amount in sections where the need for providing precise information is relatively low.

The cell state parameter and/or module state parameter is desirably configured to be generated in each of the charging process in which power is supplied (stored) to the battery module 50 from an external power supply device and the discharging process in which power is supplied to loads such as electric motors, so that the electric state or behavior characteristics of the battery cell 51 can be more precisely identified.

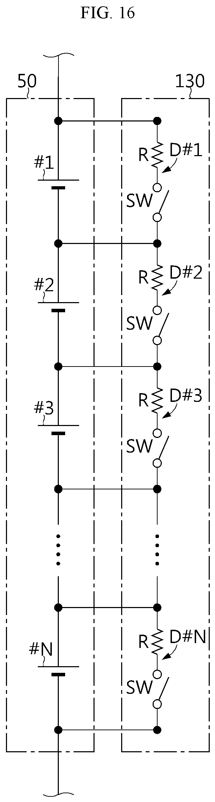

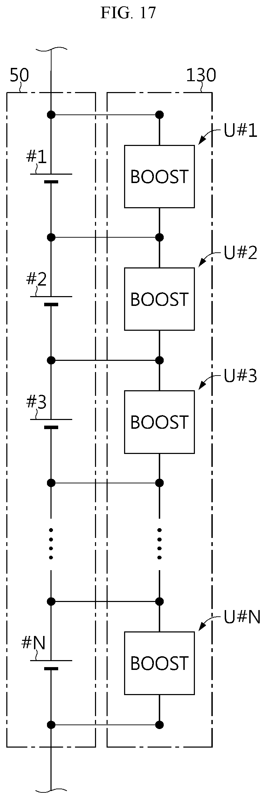

The balancing processing unit 130 is a component that performs a balancing process for the plurality of battery cells #1 to #N that make up the battery module 50, and as well known, it may include hardware components such as relays (switches), load resistors, timers, etc. Of course, the balancing processing unit 130 may be electrically connected to the battery cell 51 and configured to perform functions such as discharging and/or charging the corresponding battery cell 51 according to control signals, etc. The hardware implementation of the balancing processing unit 130 will be described separately later with reference to FIGS. 16 and 17.

When the module state parameter of the battery module 50 is generated, the control unit 140 performs a procedure (S530) to determine whether the module state parameter meets a predetermined specific condition that triggers execution of the balancing process. As an example, the specific condition may be a combination of (i) the module state parameter being greater than or equal to the reference SOC and (ii) the voltage of the degraded cell being higher than the voltage of the normal cell. As another example, the specific condition may be a combination of (i) the module state parameter being less than or equal to the reference SOC and (ii) the voltage of the normal cell being higher than the voltage of the degraded cell. If the value of step S530 is "Yes," the control unit 140 controls the balancing processing unit 130 to perform a balancing process for at least one battery cell among the plurality of battery cells #1 to #N (S540).

Of course, if there are no events such as power OFF, firmware replacement, or meeting preset end conditions, the process of the present disclosure described above can be designed to be applied cyclically so that continuous battery management can be maintained. Depending on the embodiment, in the method of FIG. 5, the step (S550) of checking whether the end condition is satisfied may be omitted. The end condition may be, for example, that the voltage deviation (e.g., the difference between the maximum voltage and the minimum voltage) of the plurality of battery cells #1 to #N is within a certain allowable range.

When a balancing necessary event occurs in which the voltage deviation of any battery cell (e.g., #1) among the plurality of battery cells #1 to #N is greater than or equal to the reference deviation, instead of immediately performing the balancing process for the battery cell (e.g., #1), the battery management apparatus 100 may proactively determine negative situations in which performance degradation of the battery module 50 or deterioration of the battery cell (e.g. #1) can occur due to the balancing process.

The battery management apparatus 100 is configured to perform the balancing process for the battery cell (e.g., #1) only when it is determined that there will be no negative consequences from performing the balancing process for the battery cell (e.g., #1). Here, the voltage deviation of a certain battery cell (e.g., #1) may mean the difference between the average voltage value of the plurality of battery cells #1 to #N and the voltage value of the battery cell (e.g., #1).

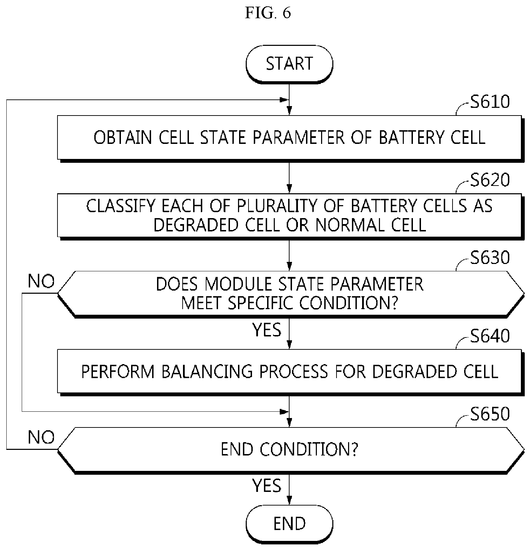

FIG. 6 is a flowchart explaining another example of a battery management method executable by the battery management apparatus shown in FIG. 1.

Referring to FIG. 6, the state detection unit 120 obtains a plurality of cell state parameters indicating the electric state of each of the plurality of battery cells #1 to #N (S610). Through collaboration with the measurement unit 110, the state detection unit 120 may generate and store the cell state parameter of each of the plurality of battery cells #1 to #N.

Depending on the embodiment, the state detection unit 120 may utilize the cell state parameters measured by the measurement unit 110 as is, but if noise components such as impulses or fluctuation waves are included in the signal output from the measurement unit 110 due to signal interference, distortion, disturbance, or the like, a hardware configuration that appropriately adjusts or filters them may be included in the state detection unit 120, or an algorithm that processes this in software may be installed in the state detection unit 120.

The battery management apparatus 100 corresponds to an embodiment in which battery cells corresponding to the normal category (hereinafter referred to as 'normal cells') and battery cells with relatively degraded behavior characteristics (hereinafter referred to as 'degraded cells') are classified in time-series according to the passage of time by comparing the electric state and/or behavior characteristics of the plurality of battery cells #1 to #N, and the balancing process is performed differentially to the plurality of battery cells #1 to #N using the results.

The voltage value has the advantage of being able to be measured or generated with a relatively simple circuit configuration (such as a configuration that measures the voltage difference between both ends of the battery cell 51), as well as a characteristic that clearly represents the intrinsic characteristics of the battery cell 51 externally, so it is possible to clearly estimate and select whether or not it is a degraded cell when this is utilized as raw data.

In this regard, the cell state parameter is not particularly limited as long as it can represent the electric state of the battery cell 51 as described above, and typically includes the voltage value of the battery cell 51.

When the cell state parameter (e.g., voltage value) of each of the plurality of battery cells #1 to #N is obtained by the state detection unit 120 (S610), the cell classifying unit 150 may classify the plurality of battery cells #1 to #N of the battery module 50 as a degraded cell or a normal cell using the voltage value of each of the plurality of battery cells #1 to #N (S620). Details of the present disclosure that classifies normal cells and degraded cells will be described later.

In this case, the control unit 140 controls the balancing processing unit 130 so that the balancing process is differentially performed according to the cell state parameters of the degraded cell and the normal cell (S640).

Specifically, in step S630, the control unit 140 may determine whether the module state parameter meets a predetermined specific condition that triggers execution of the balancing process. Step S630 may be performed on the condition that the module state parameter is greater than or equal to the reference SOC or the module state parameter is less than or equal to the reference SOC.

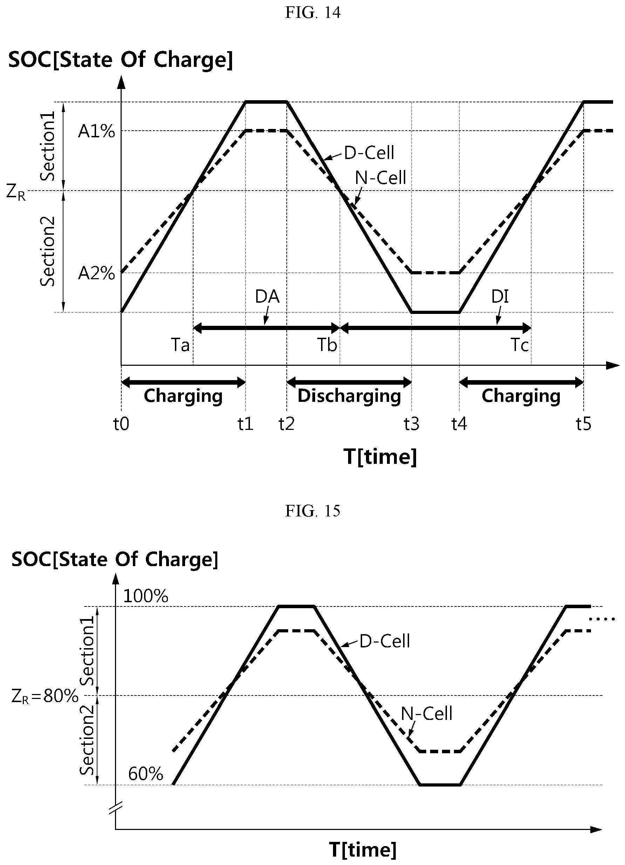

FIG. 14 is a diagram referenced to explain the process of differentially performing the balancing process for degraded cells and normal cells according to the reference SOC.

The control unit 140 may control the balancing process for degraded cells to be performed (S640). For example, when the module state parameter is greater than or equal to the reference SOC, the control unit 140 may control the balancing processing unit (130, see FIG. 16) to perform a balancing process for the degraded cell in a time section (see symbol 'DA' in FIG. 14) where the voltage of the degraded cell is higher than the voltage of the normal cell. As another example, when the module state parameter is less than or equal to the reference SOC, the control unit 140 may control the balancing processing unit (130, see FIG. 17) to perform a balancing process for the degraded cell in a time section (see symbol 'DI' in FIG. 14) where the voltage of the normal cell is higher than the voltage of the degraded cell.

Here, the balancing process for the degraded cell may mean the balancing process for each battery cell classified as a degraded cell among the plurality of battery cells #1 to #N.

On the other hand, if the value of step S630 is "no", the balancing processing unit 130 may be controlled so that the balancing process for both degraded cells and normal cells is deactivated. Of course, the above-mentioned process can also be configured to be applied recursively depending on whether the end condition is met or not, as explained above. Depending on the embodiment, the step (S650) of checking whether the end condition is satisfied may be omitted.

Hereinafter, with reference to FIGS. 2, 7, and 8, specific embodiments of the present disclosure that classify each of the plurality of battery cells #1 to #N as a degraded cell or a normal cell will be described in detail.

As shown in FIG. 2, the cell classifying unit 150 may include an input unit 151, a calculation processing unit 153, and a selection unit 155.

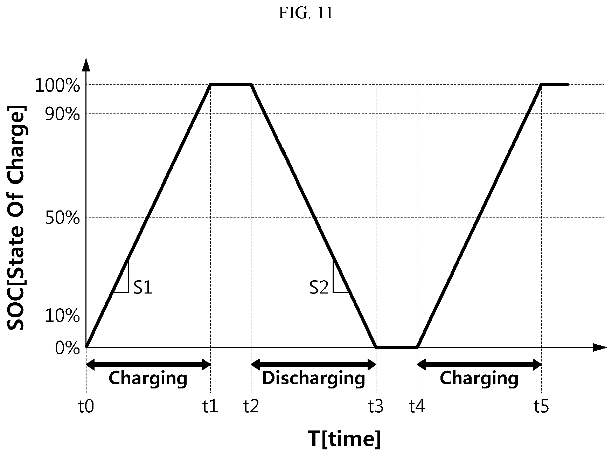

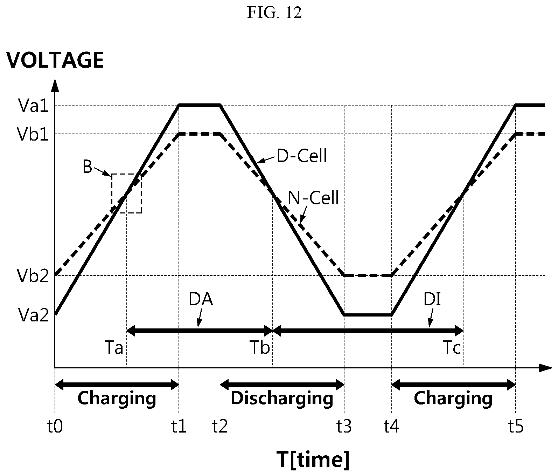

Referring to FIGS. 11 and 12, etc., the behavior characteristics of the battery cell 51 will be described, and then the specific function of the selection unit 155, which selects degraded cells and normal cells by organically reflecting these behavior characteristics, will be described in detail later.

FIG. 11 is a diagram referenced to illustratively explain changes in the SOC of a battery cell 51 over time. The SOC of battery cell 51 may be included as a cell state parameter of the battery cell 51.

Referring to FIG. 11, the battery cell 51 has a behavior characteristic in which the voltage value increases during the charging period (t0 to t1). Therefore, SOC estimated by applying a functional operation to the voltage value of the battery cell 51 also exhibits a rising behavior characteristic.

After charging is completed (e.g., fully charged state reaching SOC 100%), if other external factors such as standby current consumption, etc. are not considered, the SOC of the battery cell 51 is maintained constant during an rest period (t1 to t2) in which both charging and discharging are stopped. Subsequently, during the discharging period (t2 to t3) for driving the load means (electric motor, etc.), the voltage value and SOC of the battery cell 51 have a falling (decreasing) behavior characteristic.

After the rest period (t3 to t4) following the discharging period (t2 to t3), the charging period (t4 to t5) may proceed again through an external power supply means, etc., and the voltage value and SOC of the battery cell 51 increase again during the charging period (t4 to t5). These behavior characteristics of the battery cell 51 are repeated time-series during charging, resting, and/or discharging.

FIG. 11 is a graph illustrated based on an embodiment in which full charge (SOC 100%) and complete discharge (SOC 0%) are performed. The behavior characteristic in which the SOC of the battery cell 51 increases during charging (slope S1) and the SOC of the battery cell 51 decreases (slope S2) during discharging corresponds to the essential characteristics of the battery cell 51.

For reference, in FIG. 11 and the like, the behavior characteristics of the battery cell 51 are shown to change linearly with time for convenience of explanation. Of course, the actual behavior characteristics of the battery cell 51 may be a mixture of linearity and nonlinearity. Of course, when the measurement and generation of electrical characteristics is performed intermittently at specific periods, if post-processing such as interpolation is not considered, it may be done discontinuously, unlike the drawing.

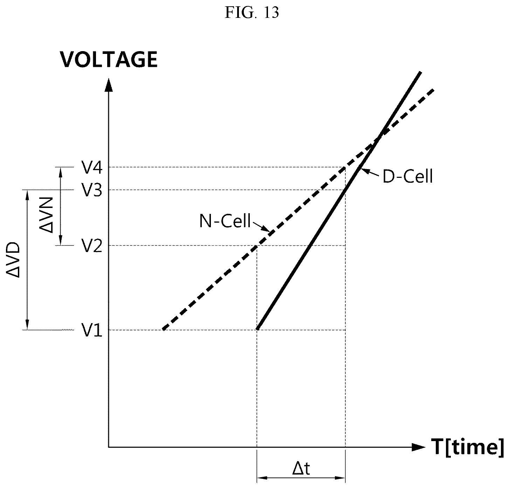

FIG. 12 is a diagram referenced to explain the behavior characteristics of normal cells N-Cell and degraded cells D-Cell, respectively, and FIG. 13 is an enlarged view of the dotted line area B shown in FIG. 12.

As previously seen with reference to FIG. 11, the voltage value of both the normal cell N-Cell and the degraded cell D-Cell increases during charging and decreases during discharging.

If performance deterioration occurs in the battery cell 51 due to aging depending on the period of use, as well as material characteristics, artificial use environment, etc., the causes or factors that cause such performance deterioration are largely expressed as intrinsic resistance components, so the internal resistance of the cell where performance degradation or deterioration occurs and the corresponding resistance component (collectively referred to as 'internal resistance') increase.

In the battery cell 51, which has a relatively increased internal resistance, a relatively high voltage rise occurs compared to other battery cell 51 due to the increased internal resistance even when the same amount of current is introduced, according to the general law (Ohm's law) of the correlation between voltage and current. In other words, even if a relatively small current is introduced, the voltage rises to the same level as other battery cells 51.

As explained previously, SOC can be functionally calculated based on the voltage of the battery cell 51, so SOC also has characteristic changes corresponding to changes in voltage.

From the perspective of discharge, discharge is performed when the charge amount (charge, current component) stored in the battery cell 51 is released to the outside, so when the same amount of current is released to the outside, the voltage drop is relatively larger than other battery cells 51 due to the deviation of the internal resistance.

Referring to FIG. 12, in the same charging period (t0 to t1), the voltage of the degraded cell D-Cell increases by a large amount from Va2 to Va1, while the voltage of the normal cell N-Cell increases by a small amount from Vb2 to Vb1. In other words, in the case of the degraded cell D-Cell, the voltage change over the same charging period is relatively larger than that of the normal cell N-Cell.

In the same discharging period (t2 to t3), the voltage of the degraded cell D-Cell decreases from Va1 to Va2, and the voltage of the normal cell N-Cell decreases from Vb1 to Vb2, so during the discharging period (t2 to t3), the voltage change rate of the degraded cell D-Cell is greater than that of the normal cell N-Cell. In other words, in both the charging and discharging processes, the degraded cell D-Cell has a relatively large change rate in electrical characteristics (voltage, etc.) compared to the normal cell N-Cell.

In the drawing, the behavior characteristics of the charging and discharging processes are shown to correspond (symmetry) to each other, but the behavior characteristics of the charging and discharging processes may not correspond (symmetry) due to the influence by external factors such as external power supply means, power characteristics of load means (electric motors, etc.), specifications, etc., as well as the electrochemical properties inherent in charging and discharging.

Based on these behavior characteristics, as shown in FIG. 13, the cell behavior parameters of the normal cell N-Cell and the degraded cell D-Cell are expressed in the equation below, respectively.$\begin{matrix}SD = \frac{Δ VD}{Δ t} = \frac{\left(V3-V1\right)}{Δ t} \\ SN = \frac{Δ VN}{Δ t} = \frac{\left(V4-V2\right)}{Δ t}\end{matrix}$

In the above equation, Δt is a predetermined small time. SD is the change rate of voltage value as a cell characteristic parameter of the degraded cell D-Cell. SN is the change rate of voltage value as a cell characteristic parameter of the normal cell N-Cell. Therefore, in the charging process, SD has a larger value than SN, and in the discharging process, SD has a larger value (based on absolute value) than SN.

In this way, the level of performance degradation of the battery cell 51 can be effectively identified based on the voltage value and/or the change trend (cell behavior parameter) of the voltage value over time at a specific timing of the battery cell 51.

Furthermore, through a relative comparison of the size (absolute value size) of the change rate per hour of each cell state parameter of each of the plurality of battery cells #1 to #N, the degree or size of degradation of each of the plurality of battery cells #1 to #N can be quantified mathematically. That is, the plurality of battery cells #1 to #N can be ranked in descending or ascending order based on each cell behavior parameter (corresponding to the degree of degradation).

The cell classifying unit 150 is configured to classify each of the plurality of battery cells #1 to #N as a degraded cell D-Cell or a normal cell N-Cell based on the plurality of cell behavior parameters representing the behavior characteristics of electric state of each of the plurality of battery cells #1 to #N.

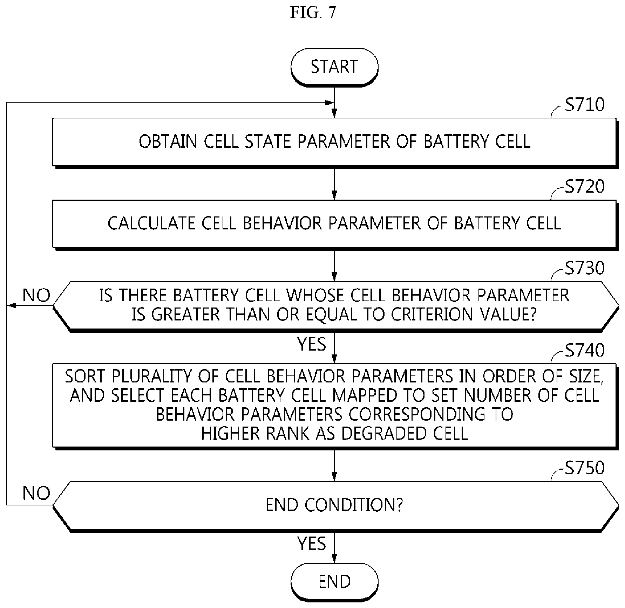

FIG. 7 is a flowchart explaining still another example of a battery management method executable by the battery management apparatus shown in FIG. 1.

Referring to FIG. 7, when the input unit 151 receives the cell state parameters (e.g., voltage, SOC, etc.) of the battery cell 51 from the state detection unit 120 in time-series (S710), the calculation processing unit 153 calculates the cell behavior parameter representing the behavior characteristics of the cell state parameter of the battery cell 51 (S720).

As seen above, the cell behavior parameter of any battery cell 51 may include the hourly change rate of the cell state parameter of the corresponding battery cell 51. Depending on the embodiment, the hourly change rate of the SOC or the size difference of the SOC generated through functional processing of the difference value of electrical characteristic, voltage value, etc. of each of the plurality of points or the plurality of time sections can be used as the behavior characteristics.

When the cell behavior parameter of the battery cell 51 is calculated, the selection unit 155 classifies each of the plurality of battery cells #1 to #N as a degraded cell D-Cell or a normal cell N-Cell based on the relative differences between the plurality of cell behavior parameters that correspond one-to-one to the plurality of battery cells #1 to #N.

If the number of target cells identified in step S730 is less than or equal to the set number (n, a natural number greater than or equal to 1 but less than N), all identified target cells may be classified as degraded cells. If the number of target cells identified in step S730 exceeds the set number (n), step S740 may be executed.

In step S740, the selection unit 155 may sort the plurality of cell behavior parameters one-to-one mapped to the plurality of target cells identified in step S730 in order of size, and select each of the battery cells mapped to the set number (n) of cell behavior parameters corresponding to the higher rank as a degraded cell D-Cell (S740). Each remaining battery cell that is not selected as a degraded cell D-Cell in step S740 is classified as a normal cell.

The set number (n) may be a predetermined constant. Alternatively, the selection unit 155 may determine the set number (n) based on environmental information such as battery efficiency, current output characteristics, specifications of load means (electric motor, etc.), battery cell durability, battery cell use period, charge/discharge cycle, SOH, etc. Of course, the above-described process can also be configured to be applied recursively depending on whether the end condition is met or not, as described above. Depending on the embodiment, the step (S750) of checking whether the end condition is satisfied may be omitted.

In addition, the selection unit 155 may be configured to determine whether or not there is a battery cell (hereinafter referred to as a 'target cell') whose cell behavior parameter (hourly change rate of the cell state parameter or its absolute value, etc.) of the battery cell 51 is greater than or equal to the reference value (S730), and then select at least one of the target cell(s) as a degraded cell D-Cell (S740).

In this way, according to the embodiment in which the target cell is preemptively determined before selecting the degraded cell D-Cell, it is possible to more precisely filter errors due to noise signals, etc., temporality of deviation, voltage deviation that does not adversely affect the normal operation of the battery, etc., allowing the efficiency of differential application of the balancing process to be further optimized.

The reference value (may also be referred to as 'reference change rate') can be set to the calculated average value, weighted average value, change rate with the range of standard deviation, average value excluding the maximum and minimum, etc. of the cell behavior parameters of all battery cells #1 to #N constituting the battery module 50. The reference value may be individually predetermined for charge and discharge, respectively.

Additionally, based on the number of selected cells, the reference value may also be set to a value that allows the number of normal cells N-Cells to be greater than the number of degraded cells D-Cells. For example, if the total number N of battery cells #1 to #N included in the battery module 50 is 30, a value that allows the number of battery cells 51 classified as normal cells N-Cell to be at least 16 can be set to the reference change rate.

According to this implementation configuration, the time section in which the balancing process is deactivated can be optimized, as well as the energy consumption of the degraded cell D-Cell is appropriately limited by the balancing process, so that the output performance of the entire battery module 50 can be maintained not to deviate significantly from the normal range.

In this way, if each of the plurality of battery cells #1 to #N is classified as a normal cell N-Cell or a degraded cell D-Cell, the control unit 140 may control the balancing process for the degraded cell D-Cell to be performed at least in the time section DA, as shown in FIG. 12. The time section DA may belong to the charging period of the battery module 50, and in the time section DA, the voltage value of the degraded cell D-Cell is greater than or equal to the voltage value of the normal cell N-Cell.

In the section (DI) where the voltage value of the degraded cell D-Cell is lower than the voltage value of the normal cell N-Cell, that is, the voltage value of the normal cell N-Cell is higher than the voltage value of the degraded cell D-Cell, the control unit 140 controls the balancing process not to be performed even if voltage deviation occurs. The time section (DI) may belong to the discharging period of the battery module 50.

Meanwhile, if the voltage deviation of all of the plurality of battery cells #1 to #N is less than the reference deviation, it is natural that the balancing process is not performed for any of the plurality of battery cells #1 to #N.

The battery management apparatus 100 can differentially perform the balancing process by selecting the normal cell N-Cell and the degraded cell D-Cell and using the behavior characteristics of their electrical characteristics (voltage value, etc.) Table 1 below is an example of operating conditions referred to in carrying out the balancing process.

**[Table 1]**

| # | Environmental condition 1 | Environmental condition 2 | Whether to perform the balancing process |
|---|---|---|---|
| 1 | Voltage deviation ≥ reference value | Voltage of degraded cell ≥ voltage of normal cell | O |
| 2 | | Voltage of degraded cell < voltage of normal cell | X |
| 3 | Voltage deviation < reference value | | X |

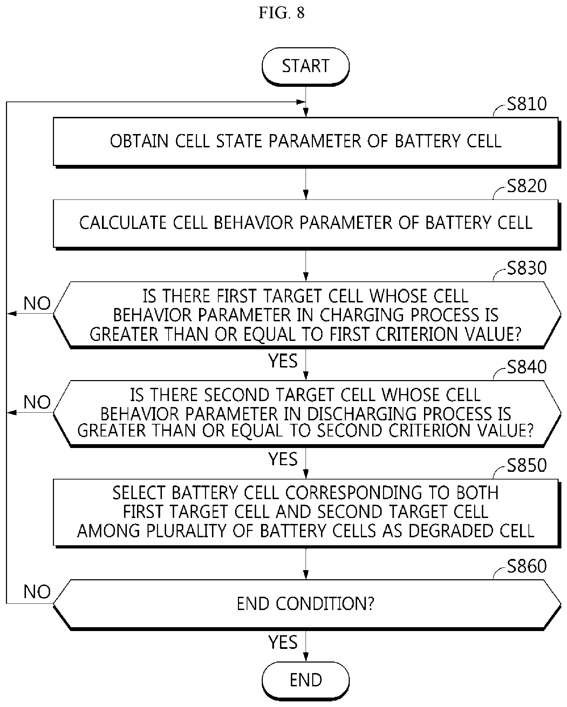

FIG. 8 is a flowchart explaining the process of classifying each of a plurality of battery cells #1 to #N as a normal cell N-Cell or a degraded cell D-Cell.

Referring to FIG. 8, when the cell state parameter (e.g., voltage, etc.) of the battery cell 51 is input to the input unit 151 from the state detection unit 120 (S810), the calculation processing unit 153 calculates the cell behavior parameter from the cell state parameter of the battery cell 51 (S820). Since the contents of the calculation of cell behavior parameters, etc. correspond to the contents previously described with reference to FIG. 7, detailed description thereof will be omitted.

Subsequently, the selection unit 155 may be configured to select the degraded cell D-Cell, etc. based on the charging procedure and the discharging procedure, respectively.

Specifically, in at least one of the discharging process and the charging process, the selection unit 155 may rank the plurality of battery cells #1 to #N by sorting the plurality of cell behavior parameters one-to-one mapped to plurality of battery cells #1 to #N in order of size.

The selection unit 155 may be configured to perform the process of identifying whether there is a first target cell, which is a battery cell in which the cell behavior parameter obtained in the charging process is greater than or equal to the first reference value, based on the plurality of cell behavior parameters representing the behavior characteristics of each of the plurality of battery cells #1 to #N input in time-series from the calculation processing unit 153 (S830), and the process of identifying whether there is a second target cell, which is a battery cell in which the cell behavior parameter (absolute value) obtained in the discharging process is greater than or equal to the second reference value (S840). The cell behavior parameter obtained in the charging process may be referred to as the first cell behavior parameter, and the cell behavior parameter obtained in the discharging process may be referred to as the second cell behavior parameter. The first reference value may be the average value of the first cell behavior parameters of the plurality of battery cells #1 to #N. The second reference value may be the average value of the second cell behavior parameters of the plurality of battery cells #1 to #N.

To optimize each reference value, the time length of the charging process for determining the first cell behavior parameter and the time length of the discharging process for determining the second cell behavior parameter may be set to a predetermined reference time or longer, respectively.

In this way, the process of checking whether the cell behavior parameter of each of the plurality of battery cells #1 to #N is greater than or equal to the first reference value based on the time of charging and the process of checking whether the cell behavior parameter of each of the plurality of battery cells #1 to #N is greater than or equal to the second reference value based on the time of discharging can be performed in advance.

The selection unit 155 may be configured to select, among the plurality of battery cells #1 to #N, the battery cell 51 identified as having a cell behavior parameter greater than or equal to the reference value in both the charging process and the discharging process as the degraded cell D-Cell (S850).

In step S850, when the number of battery cells corresponding to both the first and second target cells among the plurality of battery cells #1 to #N is less than or equal to the threshold number (m, m is a natural number greater than or equal to 1 and less than N), each battery cell corresponding to both the first and second target cells can be selected as a degraded cell D-Cell.

On the other hand, if the number of battery cells corresponding to both the first and second target cells among the plurality of battery cells #1 to #N exceeds the threshold number (m), the selection unit 155 may select only the threshold number (m) of battery cells among the battery cells corresponding to both the first and second target cells as degraded cells D-Cell (S850). In this case, each of the threshold number (m) of battery cells can be selected as a degraded cell D-Cell in the descending order of the average value of the cell behavior parameter associated with the charging process and the cell behavior parameter associated with the discharging process.

According to this implementation configuration, as described above, errors due to noise signals, etc., and temporal deviations, etc. can be excluded in advance, thereby improving the overall efficiency and accuracy of the balancing process.

The threshold number (m) may be a predetermined constant. Alternatively, the threshold number (m) is desirably configured to set variably based on environmental information such as battery efficiency, current output characteristics, specifications of load means (electric motor, etc.), battery cell durability, battery cell usage period, charge/discharge cycle, and SOH.

Although input/output or measured data or information, calculated data or information, etc. are not separately shown in the drawings, it goes without saying that they can be stored, updated, or read and utilized in hardware means that implement the corresponding functions. It is obvious that the process shown in FIG. 8 can also be designed to be applied cyclically. Depending on the embodiment, the step (S860) of checking whether the end condition is satisfied may be omitted.

The control unit 140 may intentionally not execute the balancing process for the normal cell N-Cell in a time section where the voltage of the normal cell N-Cell is maintained higher than the voltage of the degraded cell D-Cell. On the other hand, it is possible to control the balancing process for the degraded cell D-Cell to be performed only in the time section where the voltage of the degraded cell D-Cell is maintained higher than the voltage of the normal cell N-Cell.

Accordingly, the energy charged in the normal cell N-Cell, which has sufficient available capacity and excellent behavior characteristics, can be prevented from being unnecessarily consumed by the balancing process, and it is possible to effectively solve the problem that the available capacity of the battery module 50 is not fully utilized since the SOC of the battery module 50 is limited early due to the behavior characteristics of the degraded cell D-Cell.

The control unit 140 may be configured to transmit various information and data generated by the above-described process to an external control device 200 installed in an electric vehicle, etc., through the interface unit 160. The control unit 140 may be configured to perform various processes according to the present disclosure, based on a control signal or set value received from the external control device 200 through the interface unit 160.

In addition, when a battery cell (e.g., #1) that is selected as a degraded cell D-Cell continuously over a certain period of time or repeatedly over a certain number of times is confirmed, the cell classifying unit 150 or the control unit 140 may be configured to transmit alarm information about the need for replacement of the battery cell (e.g., # 1) to the external control device 200 through the interface unit 160.

In this regard, when the identification information of the battery cell 51 constituting the battery module 50 is databased in advance, information physically identifying the battery cell 51 classified as a degraded cell D-Cell can also be transmitted to the external control device 200 along with the alarm information.

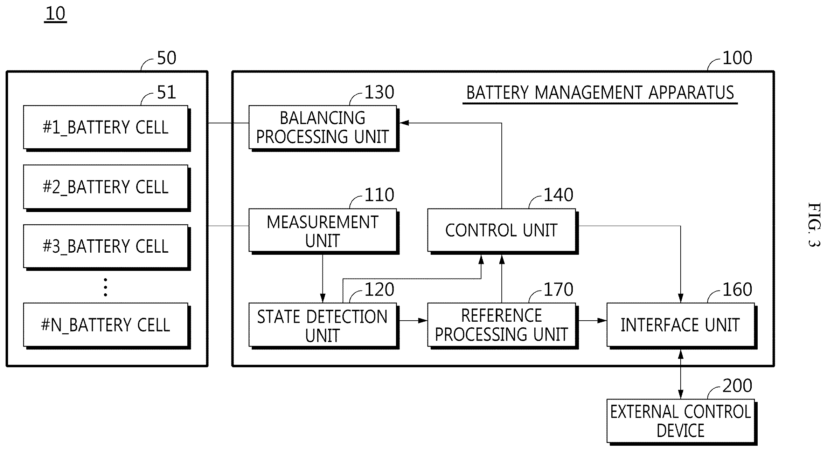

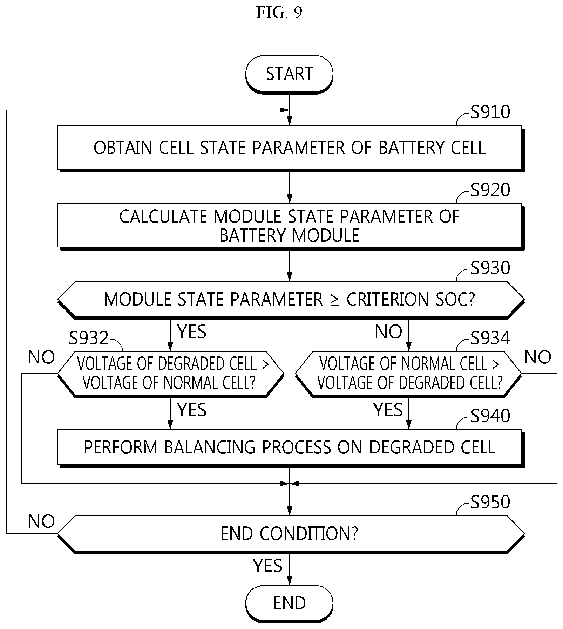

FIG. 3 is a block diagram schematically showing the configuration of a battery pack according to another embodiment of the present disclosure, and FIG. 9 is a flowchart explaining a process executable by the battery management apparatus shown in FIG. 3.

The battery pack 10 shown in FIG. 3 includes a battery module 50 and a battery management apparatus 100.

The battery management apparatus 100 is provided to control so that the balancing process of each of the plurality of battery cells #1 to #N is performed differentially, by reflecting the reference SOC or statistical values calculated by user charging and discharging patterns, etc.

In contrast to the detailed configuration shown in FIG. 1, FIG. 3 shows that the reference processing unit 170 is replaced with the cell classifying unit 150. However, this is only one embodiment, and the battery management apparatus 100 may also be implemented as an embodiment including both the reference processing unit 170 and the cell classifying unit 150.

The reference processing unit 170 stores the reference SOC, which is used for differential control of the balancing process performed by the balancing processing unit 130.

In step S910, the state detection unit 120 obtains the plurality of cell state parameters (e.g., voltage value, etc.) mapped one-to-one to the plurality of battery cells #1 to #N from the measurement unit 110.

In step S920, the state detection unit 120 calculates a module state parameter indicating the electric state of the battery module 50 based on the plurality of cell state parameters. The module state parameter includes the SOC of the battery module 50. The SOC of the battery module 50 may be the average, minimum, or maximum value of the SOC of the plurality of battery cells #1 to #N based on the plurality of cell state parameters.

In step S930, the control unit 140 may determine whether the module state parameter (e.g., SOC, etc.) of the current point is greater than or equal to the reference SOC stored in the reference processing unit 170. If the value of step S930 is "Yes," the process may proceed to step S932. The value of step S930 being "No" means that the module state parameter is less than the reference SOC. If the value of step S930 is "No", the process may proceed to step S934.

In step S932, the control unit 140 may determine whether the voltage of the degraded cell is higher than the voltage of the normal cell. If the value of step S932 is "Yes," the process may proceed to step S940.

In step S934, the control unit 140 may determine whether the voltage of the normal cell is higher than the voltage of the degraded cell. If the value of step S934 is "Yes," the process may proceed to step S940.

In step S940, the control unit 140 may control the balancing processing unit 130 to perform a balancing process on at least one battery cell classified as a degraded cell D-Cell among the plurality of battery cells #1 to #N.

When the process proceeds from step S932 to step S940, the control unit 140 may control the balancing processing unit 130 shown in FIG. 16 to perform a balancing process for the degraded cell D-Cell. On the other hand, when the process proceeds from step S934 to step S940, the control unit 140 may control the balancing processing unit 130 shown in FIG. 17 to perform a balancing process for the degraded cell D-Cell.

Of course, the above-described process can also be configured to be applied recursively depending on whether the end condition is met or not, as described above. Depending on the embodiment, the step (S950) of checking whether the end condition is satisfied may be omitted.

In relation to this, in order to classify each of the plurality of battery cells #1 to #N as a degraded cell D-Cell or a normal cell N-Cell, at least one of the charging process and the discharging process may need to proceed prior to this. Therefore, the charging process and the discharging process that proceed prior to the cell classification procedure can be referred to as the preliminary charging process and the preliminary discharging process, respectively.

For example, step S510 of FIG. 5, step S610 of FIG. 6, step S710 of FIG. 7, step S810 of FIG. 8, and step S910 of FIG. 9 may be each performed while at least one of the preliminary charging process and the preliminary discharging process is in progress.

In addition, step S540 of FIG. 5, step S640 of FIG. 6, and step S940 of FIG. 9 may each be executed in the charging process and/or the discharging process following the preliminary charging process and/or the preliminary discharging process.

As described above with reference to FIG. 11, etc., the cell behavior parameter of the degraded cell D-Cell may be relatively larger than the cell behavior parameter of the normal cell N-Cell. In other words, in a situation where the same current flows, the degraded cell D-Cell has higher behavior characteristics than the charging and discharging rates of the normal cell N-Cell.

The SOC of the battery module 50 may be determined dependent on the battery cell 51 having a relatively high voltage among the plurality of battery cells #1 to #N.

Assuming that the SOC of the battery module 50 is above an appropriate level, it can be said that among the plurality of battery cells #1 to #N, the battery cell having a higher voltage has higher possibility of being determined as a degraded cell D-Cell compared to other battery cells.

From a corresponding perspective, if the SOC of the battery module 50 is lower than the appropriate level, the battery cell 51 having a relatively high voltage has higher possibility of being determined as a normal cell N-Cell compared to other battery cells.

Considering these points comprehensively, the reference processing unit 170 may set the reference SOC to a value that matches the overall behavior characteristics of the battery module 50.

The control unit 140 may control the balancing process for the degraded cell D-Cell to be performed when the current SOC of the battery module 50 is higher than the reference SOC.

On the other hand, the control unit 140 may inactivate the balancing process for both the degraded cell D-Cell and the normal cell N-Cell when the current SOC of the battery module 50 is less than the reference SOC.

If the balancing process is controlled to be differentially performed in this way, it is possible to solve not only the problem that the energy stored in the normal cell N-Cell is exhausted repeatedly and unnecessarily so that the available capacity of the battery module 50 is not sufficiently used as a driving source, but also various problems derived from this such as performance degradation, shortened lifespan, overcharging, etc.

Referring to FIG. 14, the first SOC section (Section 1) corresponds to the area where the SOC of the battery module 50 is greater than or equal to the reference SOC (Z_{R}), and the second SOC section (Section 2) corresponds to the area where the SOC of the battery module 50 is less than the reference SOC (Z_{R}).

The first SOC section (Section 1) may be estimated as an area where the influence of the degraded cell D-Cell is relatively large. Therefore, the control unit 140 may control the balancing processing unit 130 so that the balancing process for the degraded cell D-Cell is activated in the time section DA from Ta to Tb corresponding to the first SOC section (Section 1).

The second SOC section (Section 2) may correspond to an area where the influence of the normal cell N-Cell is relatively large. Therefore, the control unit 140 may control the balancing processing unit 130 so that the balancing process for all of the plurality of battery cells #1 to #N is not performed in the time section (DI) from Tb to Tc corresponding to the second SOC section (Section 2).

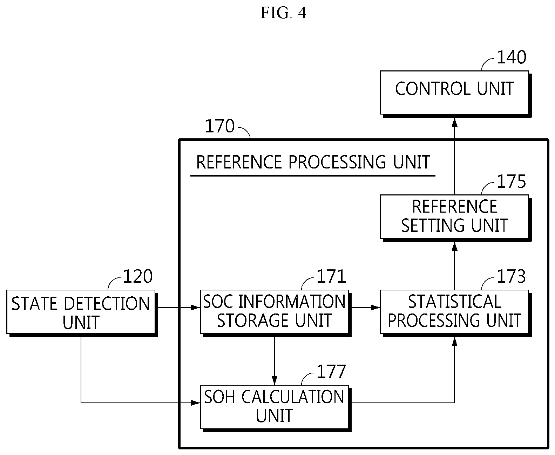

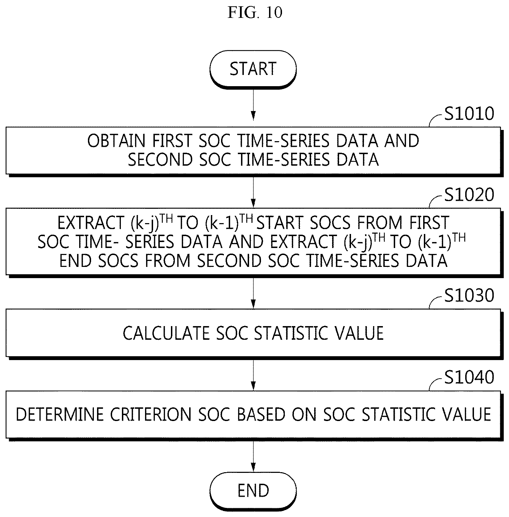

FIG. 4 is a block diagram schematically showing the configuration of the reference processing unit 170 shown in FIG. 3, and FIG. 10 is a flowchart referenced to explain the process of determining a reference SOC.

Referring to FIG. 4, the reference processing unit 170 may include a SOC information storage unit 171, a statistical processing unit 173, a reference setting unit 175, and a SOH calculation unit 177.

Each time the charging process of the battery module 50 is performed, the SOC information storage unit 171 may store the first SOC, which is the SOC of the battery module 50 at the start point of the charging process, and the second SOC, which is the SOC of the battery module 50 at the end point, in conjunction with the state detection unit 120 by mapping them to the turn number of the charging process. Accordingly, the first SOC time-series data and the second SOC time-series data may be stored in the SOC information storage unit 171.

The first SOC time-series data includes the first to (k-1)th start SOCs, which represent the SOC of the battery module 50 at each start point of the first to (k-1)th charging processes conducted in the past for the battery module 50. k is an index indicating the turn of the latest charging process and is a natural number of 2 or more. That is, whenever the previous charging process for the battery module 50 is completed and a new charging process proceeds, k increases by 1.

The second SOC time-series data includes the first to (k-1)th end SOCs, which represent the SOC of the battery module 50 at each end point of the first to (k-1)th charging processes.

In step S1010, the statistical processing unit 173 obtains the first SOC time-series data and the second SOC time-series data from the SOC information storage unit 171.

In step S1020, the statistical processing unit 173 may extract (k-j)th to (k-1)th start SOCs from the first SOC time-series data. Additionally, the statistical processing unit 173 may extract (k-j)th to (k-1)th end SOCs from the second SOC time-series data. Here, j is the reference number.

The reference number (j) may be a predetermined natural number greater than or equal to 1. Alternatively, the statistical processing unit 173 may determine the reference number (j) based on the SOH of the battery module.

In step S1030, the statistical processing unit 173 may calculate the SOC statistic value to be equal to the average value of the (k-j)th to (k-1)th start SOCs and the (k-j)th to (k-1)th end SOCs. The SOC statistic value can be used to calculate the reference SOC to be applied in the period from the end of the (k-1)th charging process to the start of the (k+1)th charging process.

In step S1040, the reference setting unit 175 determines the reference SOC based on the SOC statistic value calculated by the statistical processing unit 173.

The method according to FIG. 10 may be configured to be applied recursively depending on whether the end condition is met or not. Depending on the embodiment, the step of checking whether the end condition is satisfied (S1060) may be omitted.

The statistical processing unit 173 may update the first SOC time-series data, the second SOC time-series data, and the SOC statistic value used in the charging process of the previous turn each time a new turn of charging process is completed.

For example, if the current charging process is the 31st charging process (i.e. k=31), 30 first SOCs and 30 second SOCs may be already stored in the SOC information storage unit 171 through the first to 30th charging processes. The statistical processing unit 173 may calculate the SOC statistic value for the current charging process based on at least one of 30 first SOCs and at least one of 30 second SOCs.

Depending on the embodiment, the statistical processing unit 173 may calculate the SOC statistic value by selectively using only S (greater than or equal to 1 and less than k) first and second SOCs in reverse order based on the current order. For example, when k = 31 and S = 5, the SOC statistic value for the current charging process may be calculated based on 5 first SOCs and 5 second SOCs obtained in the 26th to 30th charging processes.

According to this implementation configuration, the SOC statistic value is calculated using the latest results, so the past charging and discharging pattern of the battery module 50 can be more effectively reflected in the differential execution of the balancing process.

As an example, the SOC statistic value may be the average value of S first SOCs and S second SOCs. The reference setting unit 175 may determine the reference SOC to be the same as the SOC statistic value or to be the same as a value obtained by multiplying the SOC statistic value by a correction coefficient. The correction coefficient may be a predetermined constant or an adjustable value based on the SOH of the battery module 50.

FIG. 15 is a diagram referenced to explain the differential balancing process implemented when the reference SOC is 80%. In FIG. 15, it is illustrated that the SOC swing range is 60% to 100%, and the reference SOC is 80%, which is the exact center of the SOC swing range.

The embodiment shown in FIG. 15 may not be exactly the same as the above embodiment in which the balancing process is differentially performed through calculation and comparison of the voltage values (electrical characteristics) of the degraded cell D-Cell and the normal cell N-Cell. However, as described above, the methodology of using the SOC value of the battery module 50 inherently reflects the behavior characteristics of the degraded cell D-Cell and the normal cell N-Cell, so *both can provide corresponding results.*

Meanwhile, the SOH calculation unit 177 may be configured to calculate the SOH of the battery cell 51 and/or the battery module 50 using the information about the electrical characteristics of the battery cell 51 or the battery module 50 input from the state detection unit 120, the previously stored information such as durability or lifespan of the battery cell 51, etc.

The SOH is information that represents a kind of degradation degree, and as the degradation degree increases, the change rate of electrical characteristics accelerates due to an increase in internal resistance.

Therefore, the reference setting unit 175 may determine the reference SOC further based on the SOH of the battery module 50. As an example, the reference setting unit 175 may determine a correction coefficient corresponding to the current SOH of the battery module 50 based on a predetermined negative correspondence between the SOH and the correction coefficient, and then determine the reference SOC by multiplying the determined correction coefficient by the SOC statistic value. According to this, as the SOH of the battery module 50 decreases, the correction coefficient increases. As a result, even if the SOC statistic value is the same, as the SOH of the battery module 50 decreases, the reference SOC increases.

As mentioned above, if the reference SOC is determined by reflecting the SOH of the battery module 50, sections in which the cell state parameter of the degraded cell D-Cell is higher than the cell state parameter of the normal cell N-Cell can be more precisely distinguished, so the efficiency of the differential balancing process can also be increased.

The battery pack 10 may further include various other components in addition to the battery module 50 and the battery management apparatus 100, for example components of the battery pack known at the filing point of the present disclosure, such as BMS, busbar, pack case, relay, current sensor, etc.

The battery management apparatus 100 may be included in an electric vehicle. That is, the electric vehicle according to the present disclosure may include the aforementioned battery management apparatus 100 or a battery pack including the same. In addition, the electric vehicle according to the present disclosure may further include various other components, such as a vehicle body, a motor, and an ECU (electronic control unit), in addition to the battery management apparatus 100 or the battery pack.

FIG. 16 is a diagram referenced to schematically explain an example of the balancing processing unit shown in FIGS. 1 and 3. To aid understanding, FIG. 16 shows the configuration of the balancing processing unit 130 as well as the coupling relationship between the battery module 50 and the balancing processing unit 130.

Referring to FIG. 16, the balancing processing unit 130 may include a plurality of buck balancing circuits D#1 to D#N.

The control unit 140 is operably coupled to the plurality of buck balancing circuits D#1 to D#N so as to output control signals to each of the plurality of buck balancing circuits D#1 to D#N.

The control signal output from the control unit 140 to each of the plurality of buck balancing circuits D#1 to D#N may be a PWM (Pulse Width Modulation) signal in which high-level voltage and low-level voltage are alternately repeated.

The plurality of buck balancing circuits D#1 to D#N are provided one-to-one to the plurality of battery cells #1 to #N. In other words, when i is a natural number of N or less, the buck balancing circuit D#i is provided for selective implementation of the balancing process for the battery cell #i.

The buck balancing circuit D#i may include a balancing switch SW and a resistor R. In other words, the buck balancing circuit D#i includes a serial circuit of the balancing switch SW and the resistor R. The buck balancing circuit D#i is connected in parallel to the battery cell #i.

The balancing switch SW may be turned on in response to the control signal from the control unit 140 being a high-level voltage. The balancing switch SW may be turned off in response to the control signal from the control unit 140 being a low-level voltage.

While the balancing switch SW is turned on, a closed circuit including the buck balancing circuit D#i and the battery cell #i is formed, and current flows through the closed circuit.

When the balancing switch SW of the buck balancing circuit D#i is turned on during the rest period (e.g., time t1 to t2 in FIG. 14) when both charging and discharging of the battery module 50 are stopped, the energy stored in the battery cell #i is consumed by the buck balancing circuit D#i, and the cell state parameter of the battery cell #i gradually deteriorates.

When the balancing switch SW of the buck balancing circuit D#i is turned on in the charging period of the battery module 50 (e.g., time Ta to t1 in FIG. 14), the charging current of the battery module 50 is distributed to the battery cell #i and the buck balancing circuit D#i. Therefore, the charging speed of the battery cell #i becomes slow.

When the balancing switch SW of the buck balancing circuit D#i is turned on in the discharging period of the battery module 50 (e.g., time t2 to Tb in FIG. 14), the battery cell #i can be additionally discharged by not only the discharge current of the battery module 50 but also the buck balancing circuit D#i. Therefore, the discharge speed of the battery cell #i becomes faster.

<Balancing process for only degraded cells among normal cells and degraded cells>

Assume that the battery cell #1 is a degraded cell D-Cell, and the battery cell #2 is a normal cell N-Cell. Then, during a period corresponding to the SOC range greater than or equal to the reference SOC (Z_{R}) (e.g., from time Ta to time Tb in FIG. 14), the balancing switch SW of the buck balancing circuit D#1 provided to the battery cell #1 will remain turned on, while the balancing switch SW of the buck balancing circuit D#2 provided to the battery cell #2 will remain turned off. In other words, the balancing processes for the battery cell #1 and the battery cell #2 are carried out differentially.

In the charging period (e.g., time Ta to t1 in FIG. 14), the charging speed of only the battery cell #1 among the battery cell #1 and the battery cell #2 decreases.

In the rest period (e.g., time t1 to t2 in FIG. 14), only the battery cell #1 among the battery cell #1 and the battery cell #2 is discharged.

In the discharging period (e.g., time t2 to Tb in FIG. 14), the discharge rate of the battery cell #1 is faster than the discharge rate of the battery cell #2.

As a result, a differential balancing process is implemented during the period from time Ta to time Tb, so the cell state parameter of the battery cell #1 as a degraded cell D-Cell and the cell state parameter of the battery cell #2 as a normal cell N-Cell can be effectively equalized.

<Balancing process for only normal cells among normal cells and degraded cells>

Assume that the battery cell #1 is a degraded cell D-Cell, and the battery cell #2 is a normal cell N-Cell. Then, during the period corresponding to the SOC range less than or equal to the reference SOC (Z_{R}) (e.g., from time Tb to time Tc in FIG. 14), the balancing switch SW of the buck balancing circuit D#1 provided to the battery cell #1 will remain turned off, while the balancing switch SW of the buck balancing circuit D#2 provided to the battery cell #2 will remain turned on. In other words, the balancing processes for the battery cell #1 and the battery cell #2 are carried out differentially.

In the discharging period (e.g., time Tb to t3 in FIG. 14), the discharge rate of the battery cell #2 is accelerated by the buck balancing circuit D#2.

In the rest period (e.g., time t3 to t4 in FIG. 14), only the battery cell #2 among the battery cell #1 and the battery cell #2 is discharged.

In the charging period (e.g., time t4 to Tc in FIG. 14), the charging speed of only the battery cell #2 among the battery cell #1 and the battery cell #2 is reduced by the buck balancing circuit D#2.

As a result, a differential balancing process is implemented during the period from time Tb to time Tc, so the cell state parameter of the battery cell #1 as a degraded cell D-Cell and the cell state parameter of the battery cell #2 as a normal cell N-Cell can be effectively equalized.

FIG. 17 is a diagram referenced to schematically explain another example of the balancing processing unit shown in FIGS. 1 and 3. To aid understanding, FIG. 17 shows the configuration of the balancing processing unit 130 as well as the coupling relationship between the battery module 50 and the balancing processing unit 130.

In contrast to the balancing processing unit 130 shown in FIG. 16, the balancing processing unit 130 shown in FIG. 17 may include a plurality of boost balancing circuits U#1 to U#N.

The control unit 140 is operably coupled to the plurality of boost balancing circuits U#1 to U#N so as to output control signals to each of the plurality of boost balancing circuits U#1 to U#N.

The plurality of boost balancing circuits U#1 to U#N are provided one-to-one to the plurality of battery cells #1 to #N. In other words, when i is a natural number less than or equal to N, the boost balancing circuit U#i is provided for selective implementation of the balancing process for the battery cell #i.

The boost balancing circuit U#i may be a direct current voltage source, for example, a DC-DC converter.

The boost balancing circuit U#i supplies charging power to the battery cell #i during operation in response to a control signal from the control unit 140.

When the boost balancing circuit U#i operates during the discharging period of the battery module 50 (e.g., time Tb to t3 in FIG. 14), the discharging power of the battery cell #i is compensated by the charging power supplied from the boost balancing circuit U#i. As a result, the discharge speed of the battery cell #i slows down.

When the boost balancing circuit U#i operates during the rest period of the battery module 50 (e.g., time t3 to t4 in FIG. 14), the cell state parameter of the battery cell #i gradually increases.

When the boost balancing circuit U#i operates during the charging period of the battery module 50 (e.g., time t4 to Tc in FIG. 14), the battery cell #i may be charged not only by the charging current of the battery module 50 but also by the boost balancing circuit U#i. Therefore, the charging speed of the battery cell #i becomes faster.

<Balancing process for only degraded cells among normal cells and degraded cells>

Assume that the battery cell #1 is a degraded cell D-Cell, and the battery cell #2 is a normal cell N-Cell. Then, during the period corresponding to the SOC range less than or equal to the reference SOC (Z_{R}) (e.g., from time Tb to time Tc in FIG. 14), the boost balancing circuit U#1 provided in the battery cell #1 will operate, while the boost balancing circuit U#2 provided to the battery cell #2 will stop operating.

In the discharging period (e.g., time Tb to t3 in FIG. 14), the discharge rate of only the battery cell #1 among the battery cell #1 and the battery cell #2 decreases.

In the rest period (e.g., time t3 to t4 in FIG. 14), only the battery cell #1 among the battery cell #1 and the battery cell #2 is independently charged.

In the charging period (e.g., time t4 to Tc in FIG. 14), the charging speed of the battery cell #1 is faster than the charging speed of the battery cell #2.

As a result, a differential balancing process is implemented during the period from time Tb to time Tc, so the cell state parameter of the battery cell #1 as a degraded cell D-Cell and the cell state parameter of the battery cell #2 as a normal cell N-Cell can be effectively equalized.

<Balancing process for only normal cells among normal cells and degraded cells>

Assume that the battery cell #1 is a degraded cell D-Cell, and the battery cell #2 is a normal cell N-Cell. Then, during the period corresponding to the SOC range greater than or equal to the reference SOC (Z_{R}) (e.g., from time Ta to time Tb in FIG. 14), the boost balancing circuit U#1 provided to the battery cell #1 will not operate, while the boost balancing circuit U#2 provided in the battery cell #2 will operate.

In the charging period (e.g., time Ta to t1 in FIG. 14), the charging speed of the battery cell #2 may be accelerated by the boost balancing circuit U#2.

In the rest period (e.g., time t1 to t2 in FIG. 14), only the battery cell #2 among the battery cell #1 and the battery cell #2 is independently charged.

In the discharging period (e.g., time t2 to Tb in FIG. 14), the discharge rate of only the battery cell #2 among the battery cell #1 and the battery cell #2 is reduced by the boost balancing circuit U#2.

As a result, a differential balancing process is implemented during the period from time Ta to time Tb, so the cell state parameter of the battery cell #1 as a degraded cell D-Cell and the cell state parameter of the battery cell #2 as a normal cell N-Cell can be effectively equalized.

Meanwhile, the balancing processing unit 130 may include both buck balancing circuits D#1 to D#N according to FIG. 16 and the boost balancing circuits U#1 to U#N according to FIG. 17.

Assume that the battery cell #1 is a degraded cell D-Cell, and the battery cell #2 is a normal cell N-Cell.

Then, at least temporarily within the period from time Ta to time Tb corresponding to the SOC range greater than or equal to the reference SOC (Z_{R}), the balancing switch SW of the buck balancing circuit D#1 provided to the battery cell #1 may be controlled to be turned on, and the boost balancing circuit U#2 provided to the battery cell #2 may be controlled to an operating state.

At least temporarily within the period from time Tb to time Tc corresponding to the SOC range less than or equal to the reference SOC (Z_{R}), the boost balancing circuit U#2 provided to the battery cell #1 may be controlled to an operating state, and the balancing switch SW provided to the battery cell #2 may be controlled to turn on.

The balancing process using the buck balancing circuits D#1 to D#N may be called a buck balancing process, a passive balancing process, or a first balancing process.

The balancing process using the boost balancing circuit U#1 to U#N may be called a boost balancing process, an active balancing process, or a second balancing process.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery management apparatus (100) for a battery module (50) including a plurality of battery cells (51), comprising:
a state detection unit (120) configured to obtain a plurality of cell state parameters indicating an electric state of each of the plurality of battery cells (51), wherein the cell state parameter represents at least one of voltage and SOC, State of Charge;
a balancing processing unit (130) configured to perform a balancing process, which is a procedure of selectively discharging or charging each of the plurality of battery cells (51), to suppress deviation in the electric state between the plurality of battery cells (51);
a cell classifying unit (150) configured to classify each of the plurality of battery cells (51) as a degraded cell or a normal cell, based on the plurality of cell state parameters; and
a control unit (140) configured to control the balancing processing unit (130) so that the balancing process for at least one battery cell (51) among the plurality of battery cells (51) is differentially performed based on the cell state parameter of the degraded cell and the cell state parameter of the normal cell;;
wherein the cell classifying unit (150) is configured to:
calculate a plurality of cell behavior parameters representing behavior characteristics of the electric state of each of the plurality of battery cells (51), based on the plurality of cell state parameters, wherein the cell behavior parameter includes a change rate of the cell state parameter; and
select, as the degraded cell, each battery cell (51), which satisfies both that the cell behavior parameter in a charging process of the battery module (50) is greater than or equal to a first reference value and that the cell behavior parameter in a discharging process of the battery module (50) is greater than or equal to a second reference value.

2. The battery management apparatus (100) according to claim 1, wherein the control unit (140) is configured to control the balancing processing unit (130) so that the balancing process for the degraded cell is performed when the cell state parameter of the degraded cell is greater than the cell state parameter of the normal cell.

3. The battery management apparatus (100) according to claim 1,
wherein the cell classifying unit (150) is configured to classify each battery cell (51) mapped to n cell behavior parameters that correspond to high ranks in size among the plurality of cell behavior parameters as the degraded cell, wherein n is a natural number of 1 or more.

4. The battery management apparatus (100) according to claim 1, wherein the state detection unit (120) is configured to obtain the SOC of the battery module (50) as a module state parameter representing an electric state of the battery module (50), and
wherein the control unit (140) is configured to control the balancing processing unit (130) so that the balancing process for the degraded cell is performed under the condition that the module state parameter is greater than or equal to a reference SOC during charging of the battery module (50), wherein the reference SOC is equal to a statistic value based on SOC time-series data .

5. The battery management apparatus (100) according to claim 1, further comprising:
a SOC information storage unit (171) configured to store first SOC time-series data and second SOC time-series data;
a statistical processing unit (173) configured to calculate a SOC statistic value based on the first SOC time-series data and the second SOC time-series data; and
a reference setting unit (175) configured to set the reference SOC to be equal to the SOC statistic value,
wherein the first SOC time-series data includes first to (k-1)^{th} start SOCs, which represent the SOC of the battery module (50) at a start point of each of first to (k-1)^{th} charging processes conducted in the past for the battery module (50),
wherein the second SOC time-series data includes first to (k-1)^{th} end SOCs, which represent the SOC of the battery module (50) at an end point of each of the first to (k-1)^{th} charging processes, and
wherein k is a natural number of 2 or more.

6. The battery management apparatus (100) according to claim 5, wherein the statistical processing unit (173) is configured to calculate the SOC statistical value further based on SOH of the battery module (50).

7. The battery management apparatus (100) according to claim 6, wherein the statistical processing unit (173) is configured to:
determine a reference number based on the SOH of the battery module (50),
extract (k-j)^{th} to (k-1)^{th} start SOCs from the first SOC time-series data,
extract (k-j)^{th} to (k-1)^{th} end SOCs from the second SOC time-series data, and
calculate the SOC statistic value to be identical to an average value of the (k-j)^{th} to (k-1)^{th} start SOCs and the (k-j)^{th} to (k-1)^{th} end SOCs,
wherein j is the reference number.

8. A battery pack (10), comprising the battery management apparatus (100) according to any one of claims 1 to 7.

9. An electric vehicle, comprising the battery pack (10) according to claim 8.

10. A battery control method executable by a battery management apparatus (100) according to any one of claims 1 to 7, for a battery module (50) including a plurality of battery cells (51), comprising:
by a state detection unit (120), obtaining a plurality of cell state parameters indicating an electric state of each of the plurality of battery cells (51), wherein the cell state parameter represents at least one of voltage and SOC, State Of Charge;
by a cell classifying unit (150), classifying each of the plurality of battery cells (51) as a degraded cell or a normal cell, based on the plurality of cell state parameters; and by a control unit (140), controlling a balancing processing unit (130) so that a balancing process, which is a procedure of selectively discharging or charging each of the plurality of battery cells (51), for at least one battery cell (51) among the plurality of battery cells (51) is differentially performed based on the cell state parameter of the degraded cell and the cell state parameter of the normal cell, to suppress deviation in the electric state between the plurality of battery cells (51),
wherein the step of classifying each of the plurality of battery cells (51) as the degraded cell or the normal cell comprises:
calculating a plurality of cell behavior parameters representing behavior characteristics of the electric state of each of the plurality of battery cells (51), based on the plurality of cell state parameters, wherein the cell behavior parameter includes a change rate of the cell state parameter;
and selecting, as the degraded cell, each battery cell (51) which satisfies both that the cell behavior parameter in a charging process of the battery module (50) is greater than or equal to a first reference value and that the cell behavior parameter in a discharging process of the battery module (50) is greater than or equal to a second reference value.

11. The battery control method according to claim 10, wherein the step of controlling the balancing processing unit (130) includes:
obtaining SOC of the battery module as a module state parameter representing the electric state of the battery module (50); and
controlling the balancing processing unit (130)so that the balancing process for the degraded cell is performed under the condition that the module state parameter is greater than or equal to a reference SOC during charging of the battery module.

## Patentansprüche

1. Batteriemanagementvorrichtung (100) für ein Batteriemodul (50), das eine Vielzahl von Batteriezellen (51) einschließt, umfassend:
eine Zustandserfassungseinheit (120), die dazu konfiguriert ist, eine Vielzahl von Zellenzustandsparametern zu erhalten, die einen elektrischen Zustand jeder der Vielzahl von Batteriezellen (51) angeben, wobei der Zellenzustandsparameter mindestens eines von Spannung und SOC, Ladezustand, darstellt;
eine Ausgleichsverarbeitungseinheit (130), die dazu konfiguriert ist, einen Ausgleichsprozess durchzuführen, der ein Verfahren zum selektiven Entladen oder Laden jeder der Vielzahl von Batteriezellen (51) ist, um eine Abweichung im elektrischen Zustand zwischen der Vielzahl von Batteriezellen (51) zu unterdrücken;
eine Zellenklassifizierungseinheit (150), die dazu konfiguriert ist, jede der Vielzahl von Batteriezellen (51) als eine degradierte Zelle oder eine normale Zelle zu klassifizieren, basierend auf der Vielzahl von Zellenzustandsparametern; und
eine Steuereinheit (140), die dazu konfiguriert ist, die Ausgleichsverarbeitungseinheit (130) so zu steuern, dass der Ausgleichsprozess für mindestens eine Batteriezelle (51) aus der Vielzahl von Batteriezellen (51) differenziell durchgeführt wird, basierend auf dem Zellenzustandsparameter der degradierten Zelle und dem Zellenzustandsparameter der normalen Zelle;
wobei die Zellenklassifizierungseinheit (150) konfiguriert ist zum:
Berechnen einer Vielzahl von Zellenverhaltensparametern, die Verhaltensmerkmale des elektrischen Zustands jeder der Vielzahl von Batteriezellen (51) darstellen, basierend auf der Vielzahl von Zellenzustandsparametern, wobei der Zellenverhaltensparameter eine Änderungsrate des Zellenzustandsparameters einschließt; und
Auswählen, als die degradierte Zelle, jeder Batteriezelle (51), die sowohl erfüllt, dass der Zellenverhaltensparameter in einem Ladevorgang des Batteriemoduls (50) größer oder gleich einem ersten Referenzwert ist, als auch, dass der Zellenverhaltensparameter in einem Entladevorgang des Batteriemoduls (50) größer oder gleich einem zweiten Referenzwert ist.

2. Batteriemanagementvorrichtung (100) nach Anspruch 1, wobei die Steuereinheit (140) dazu konfiguriert ist, die Ausgleichsverarbeitungseinheit (130) so zu steuern, dass der Ausgleichsprozess für die degradierte Zelle durchgeführt wird, wenn der Zellenzustandsparameter der degradierten Zelle größer ist als der Zellenzustandsparameter der normalen Zelle.

3. Batteriemanagementvorrichtung (100) nach Anspruch 1, wobei die Zellenklassifizierungseinheit (150) dazu konfiguriert ist, jede Batteriezelle (51), die n Zellenverhaltensparametern zugeordnet ist, die hohen Rängen in der Größe unter der Vielzahl von Zellenverhaltensparametern entsprechen, als die degradierte Zelle zu klassifizieren, wobei n eine natürliche Zahl von 1 oder mehr ist.

4. Batteriemanagementvorrichtung (100) nach Anspruch 1, wobei die Zustandserfassungseinheit (120) dazu konfiguriert ist, den SOC des Batteriemoduls (50) als einen Modulzustandsparameter zu erhalten, der einen elektrischen Zustand des Batteriemoduls (50) darstellt, und wobei die Steuereinheit (140) dazu konfiguriert ist, die Ausgleichsverarbeitungseinheit (130) so zu steuern, dass der Ausgleichsprozess für die degradierte Zelle unter der Bedingung durchgeführt wird, dass der Modulzustandsparameter während des Ladens des Batteriemoduls (50) größer oder gleich einem Referenz-SOC ist, wobei der Referenz-SOC gleich einem statistischen Wert ist, der auf SOC-Zeitreihendaten basiert.

5. Batteriemanagementvorrichtung (100) nach Anspruch 1, ferner umfassend:
eine SOC-Informationsspeichereinheit (171), die dazu konfiguriert ist, erste SOC-Zeitreihendaten und zweite SOC-Zeitreihendaten zu speichern;
eine statistische Verarbeitungseinheit (173), die dazu konfiguriert ist, einen statistischen SOC-Wert basierend auf den ersten SOC-Zeitreihendaten und den zweiten SOC-Zeitreihendaten zu berechnen; und
eine Referenzeinstelleinheit (175), die dazu konfiguriert ist, den Referenz-SOC so einzustellen, dass er gleich dem statistischen SOC-Wert ist,
wobei die ersten SOC-Zeitreihendaten erste bis (k-1)-te Start-SOCs umfassen, die den SOC des Batteriemoduls (50) an einem Startpunkt jedes von ersten bis (k-1)-ten Ladevorgängen darstellen, die in der Vergangenheit für das Batteriemodul (50) durchgeführt wurden,
wobei die zweiten SOC-Zeitreihendaten erste bis (k-1)-te End-SOCs umfassen, die den SOC des Batteriemoduls (50) an einem Endpunkt jedes von ersten bis (k-1)-ten Ladevorgängen darstellen, und
wobei k eine natürliche Zahl von 2 oder mehr ist.

6. Batteriemanagementvorrichtung (100) nach Anspruch 5, wobei die statistische Verarbeitungseinheit (173) dazu konfiguriert ist, den statistischen SOC-Wert ferner basierend auf dem SOH des Batteriemoduls (50) zu berechnen.

7. Batteriemanagementvorrichtung (100) nach Anspruch 6, wobei die statistische Verarbeitungseinheit (173) konfiguriert ist zum:
Bestimmen einer Referenznummer basierend auf dem SOH des Batteriemoduls (50),
Extrahieren der (k-j)-ten bis (k-1)-ten Start-SOCs aus den ersten SOC-Zeitreihendaten,
Extrahieren der (k-j)-ten bis (k-1)-ten End-SOCs aus den zweiten SOC-Zeitreihendaten, und
Berechnen des statistischen SOC-Wertes, sodass er identisch mit einem Durchschnittswert der (k-j)-ten bis (k-1)-ten Start-SOCs und der (k-j)-ten bis (k-1)-ten End-SOCs ist,
wobei j die Referenznummer ist.

8. Batteriepack (10), umfassend die Batteriemanagementvorrichtung (100) nach einem der Ansprüche 1 bis 7.

9. Elektrofahrzeug, umfassend den Batteriepack (10) nach Anspruch 8.

10. Batteriesteuerverfahren, das durch eine Batteriemanagementvorrichtung (100) nach einem der Ansprüche 1 bis 7 ausführbar ist, für ein Batteriemodul (50), das eine Vielzahl von Batteriezellen (51) einschließt, umfassend:
durch eine Zustandserfassungseinheit (120), Erhalten einer Vielzahl von Zellenzustandsparametern, die einen elektrischen Zustand jeder der Vielzahl von Batteriezellen (51) angeben, wobei der Zellenzustandsparameter mindestens eines von Spannung und SOC, Ladezustand, darstellt;
durch eine Zellenklassifizierungseinheit (150), Klassifizieren jeder der Vielzahl von Batteriezellen (51) als eine degradierte Zelle oder eine normale Zelle, basierend auf der Vielzahl von Zellenzustandsparametern; und durch eine Steuereinheit (140), Steuern einer Ausgleichsverarbeitungseinheit (130), sodass ein Ausgleichsprozess, der ein Verfahren zum selektiven Entladen oder Laden jeder der Vielzahl von Batteriezellen (51) ist, für mindestens eine Batteriezelle (51) aus der Vielzahl von Batteriezellen (51) differenziell durchgeführt wird, basierend auf dem Zellenzustandsparameter der degradierten Zelle und dem Zellenzustandsparameter der normalen Zelle, um eine Abweichung im elektrischen Zustand zwischen der Vielzahl von Batteriezellen (51) zu unterdrücken,
wobei der Schritt des Klassifizierens jeder der Vielzahl von Batteriezellen (51) als die degradierte Zelle oder die normale Zelle umfasst:
Berechnen einer Vielzahl von Zellenverhaltensparametern, die Verhaltensmerkmale des elektrischen Zustands jeder der Vielzahl von Batteriezellen (51) darstellen, basierend auf der Vielzahl von Zellenzustandsparametern, wobei der Zellenverhaltensparameter eine Änderungsrate des Zellenzustandsparameters einschließt; und
Auswählen, als die degradierte Zelle, jeder Batteriezelle (51), die sowohl erfüllt, dass der Zellenverhaltensparameter in einem Ladevorgang des Batteriemoduls (50) größer oder gleich einem ersten Referenzwert ist, als auch, dass der Zellenverhaltensparameter in einem Entladevorgang des Batteriemoduls (50) größer oder gleich einem zweiten Referenzwert ist.

11. Batteriesteuerverfahren nach Anspruch 10, wobei der Schritt des Steuerns der Ausgleichsverarbeitungseinheit (130) einschließt:
Erhalten des SOC des Batteriemoduls als einen Modulzustandsparameter, der den elektrischen Zustand des Batteriemoduls (50) darstellt; und
Steuern der Ausgleichsverarbeitungseinheit (130), sodass der Ausgleichsprozess für die degradierte Zelle unter der Bedingung durchgeführt wird, dass der Modulzustandsparameter während des Ladens des Batteriemoduls größer oder gleich einem Referenz-SOC ist.

## Revendications

1. Appareil de gestion de batterie (100) pour un module de batterie (50) incluant une pluralité de cellules de batterie (51), comprenant :
une unité de détection d'état (120) configurée pour obtenir une pluralité de paramètres d'état de cellule indiquant un état électrique de chacune de la pluralité de cellules de batterie (51), dans lequel le paramètre d'état de cellule représente au moins l'un parmi une tension et un SOC, (état de charge) ;
une unité de traitement d'équilibrage (130) configurée pour effectuer un processus d'équilibrage, qui est une procédure de décharge ou de charge sélective de chacune de la pluralité de cellules de batterie (51), pour supprimer l'écart dans l'état électrique entre la pluralité de cellules de batterie (51) ;
une unité de classification de cellules (150) configurée pour classifier chacune de la pluralité de cellules de batterie (51) comme une cellule dégradée ou une cellule normale, sur la base de la pluralité de paramètres d'état de cellule ; et
une unité de commande (140) configurée pour commander l'unité de traitement d'équilibrage (130) de sorte que le processus d'équilibrage pour au moins une cellule de batterie (51) parmi la pluralité de cellules de batterie (51) soit réalisé de manière différentielle sur la base du paramètre d'état de cellule de la cellule dégradée et du paramètre d'état de cellule de la cellule normale ;
dans lequel l'unité de classification de cellules (150) est configurée pour :
calculer une pluralité de paramètres de comportement de cellule représentant des caractéristiques de comportement de l'état électrique de chacune de la pluralité de cellules de batterie (51), sur la base de la pluralité de paramètres d'état de cellule, dans lequel le paramètre de comportement de cellule inclut un taux de variation du paramètre d'état de cellule ; et
sélectionner, en tant que cellule dégradée, chaque cellule de batterie (51) qui satisfait à la fois au fait que le paramètre de comportement de cellule dans un processus de charge du module de batterie (50) est supérieur ou égal à une première valeur de référence et que le paramètre de comportement de cellule dans un processus de décharge du module de batterie (50) est supérieur ou égal à une seconde valeur de référence.

2. Appareil de gestion de batterie (100) selon la revendication 1, dans lequel l'unité de commande (140) est configurée pour commander l'unité de traitement d'équilibrage (130) de sorte que le processus d'équilibrage pour la cellule dégradée soit effectué lorsque le paramètre d'état de cellule de la cellule dégradée est supérieur au paramètre d'état de cellule de la cellule normale.

3. Appareil de gestion de batterie (100) selon la revendication 1, dans lequel l'unité de classification de cellules (150) est configurée pour classifier chaque cellule de batterie (51) mappée à n paramètres de comportement de cellule qui correspondent à des rangs élevés en taille parmi la pluralité de paramètres de comportement de cellule comme la cellule dégradée, dans lequel n est un nombre naturel de 1 ou plus.

4. Appareil de gestion de batterie (100) selon la revendication 1, dans lequel l'unité de détection d'état (120) est configurée pour obtenir le SOC du module de batterie (50) comme un paramètre d'état de module représentant un état électrique du module de batterie (50), et dans lequel l'unité de commande (140) est configurée pour commander l'unité de traitement d'équilibrage (130) de sorte que le processus d'équilibrage pour la cellule dégradée soit effectué à la condition que le paramètre d'état de module soit supérieur ou égal à un SOC de référence pendant la charge du module de batterie (50), dans lequel le SOC de référence est égal à une valeur statistique basée sur des données de séries temporelles de SOC.

5. Appareil de gestion de batterie (100) selon la revendication 1, comprenant en outre :
une unité de stockage d'informations de SOC (171) configurée pour stocker des premières données de séries temporelles de SOC et des secondes données de séries temporelles de SOC ;
une unité de traitement statistique (173) configurée pour calculer une valeur statistique de SOC sur la base des premières données de séries temporelles de SOC et des secondes données de séries temporelles de SOC ; et
une unité de réglage de référence (175) configurée pour régler le SOC de référence pour qu'il soit égal à la valeur statistique de SOC,
dans lequel les premières données de séries temporelles de SOC incluent des premiers à (k-1)èmes SOC de début, qui représentent le SOC du module de batterie (50) à un point de départ de chacun des premiers à (k-1)èmes processus de charge effectués dans le passé pour le module de batterie (50),
dans lequel les secondes données de séries temporelles de SOC incluent des premiers à (k-1)èmes SOC de fin, qui représentent le SOC du module de batterie (50) à un point final de chacun des premiers à (k-1)èmes processus de charge, et
dans lequel k est un nombre naturel de 2 ou plus.

6. Appareil de gestion de batterie (100) selon la revendication 5, dans lequel l'unité de traitement statistique (173) est configurée pour calculer la valeur statistique de SOC en outre sur la base du SOH du module de batterie (50).

7. Appareil de gestion de batterie (100) selon la revendication 6, dans lequel l'unité de traitement statistique (173) est configurée pour :
déterminer un numéro de référence sur la base du SOH du module de batterie (50),
extraire les (k-j)èmes à (k-1)èmes SOC de début des premières données de séries temporelles de SOC,
extraire les (k-j)èmes à (k-1)èmes SOC de fin des secondes données de séries temporelles de SOC, et
calculer la valeur statistique de SOC pour qu'elle soit identique à une valeur moyenne des (k-j)èmes à (k-1)èmes SOC de début et des (k-j)èmes à (k-1)èmes SOC de fin,
dans lequel j est le numéro de référence.

8. Bloc-batterie (10), comprenant l'appareil de gestion de batterie (100) selon l'une quelconque des revendications 1 à 7.

9. Véhicule électrique, comprenant le bloc-batterie (10) selon la revendication 8.

10. Procédé de commande de batterie exécutable par un appareil de gestion de batterie (100) selon l'une quelconque des revendications 1 à 7, pour un module de batterie (50) incluant une pluralité de cellules de batterie (51), comprenant :
par une unité de détection d'état (120), l'obtention d'une pluralité de paramètres d'état de cellule indiquant un état électrique de chacune de la pluralité de cellules de batterie (51), dans lequel le paramètre d'état de cellule représente au moins l'un parmi une tension et un SOC, état de charge ;
par une unité de classification de cellules (150), la classification de chacune de la pluralité de cellules de batterie (51) comme une cellule dégradée ou une cellule normale, sur la base de la pluralité de paramètres d'état de cellule ; et par une unité de commande (140), la commande d'une unité de traitement d'équilibrage (130) de sorte qu'un processus d'équilibrage, qui est une procédure de décharge ou de charge sélective de chacune de la pluralité de cellules de batterie (51), pour au moins une cellule de batterie (51) parmi la pluralité de cellules de batterie (51) soit réalisé de manière différentielle sur la base du paramètre d'état de cellule de la cellule dégradée et du paramètre d'état de cellule de la cellule normale, pour supprimer l'écart dans l'état électrique entre la pluralité de cellules de batterie (51),
dans lequel l'étape de classification de chacune de la pluralité de cellules de batterie (51) comme la cellule dégradée ou la cellule normale comprend :
le calcul d'une pluralité de paramètres de comportement de cellule représentant des caractéristiques de comportement de l'état électrique de chacune de la pluralité de cellules de batterie (51), sur la base de la pluralité de paramètres d'état de cellule, dans lequel le paramètre de comportement de cellule inclut un taux de variation du paramètre d'état de cellule ; et
la sélection, en tant que cellule dégradée, de chaque cellule de batterie (51) qui satisfait à la fois au fait que le paramètre de comportement de cellule dans un processus de charge du module de batterie (50) est supérieur ou égal à une première valeur de référence et que le paramètre de comportement de cellule dans un processus de décharge du module de batterie (50) est supérieur ou égal à une seconde valeur de référence.

11. Procédé de commande de batterie selon la revendication 10, dans lequel l'étape de commande de l'unité de traitement d'équilibrage (130) inclut :
l'obtention du SOC du module de batterie comme un paramètre d'état de module représentant l'état électrique du module de batterie (50) ; et
la commande de l'unité de traitement d'équilibrage (130) de sorte que le processus d'équilibrage pour la cellule dégradée soit effectué à la condition que le paramètre d'état de module soit supérieur ou égal à un SOC de référence pendant la charge du module de batterie.
